(19) **Europäisches Patentamt / European Patent Office / Office européen des brevets**

(11) **EP 3 950 304 A1**

(12) **EUROPEAN PATENT APPLICATION**
published in accordance with Art. 153(4) EPC

(43) Date of publication:
**09.02.2022 Bulletin 2022/06**

(21) Application number: **20777748.3**

(22) Date of filing: **25.03.2020**

(51) International Patent Classification (IPC):
**B32B 5/28** (2006.01)    **B32B 27/00** (2006.01)
**C08L 69/00** (2006.01)    **C08L 63/00** (2006.01)
**C08L 71/10** (2006.01)    **C08J 5/04** (2006.01)
**C08J 5/24** (2006.01)

(52) Cooperative Patent Classification (CPC):
**B32B 5/28; B32B 27/00; C08J 5/04; C08J 5/24;
C08L 63/00; C08L 69/00; C08L 71/10**

(86) International application number:
**PCT/JP2020/013322**

(87) International publication number:
**WO 2020/196617 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2019 JP 2019057952
29.03.2019 JP 2019066082**

(71) Applicant: **NIPPON STEEL Chemical & Material
Co., Ltd.
Tokyo 103-0027 (JP)**

(72) Inventors:
• **TAKAHASHI Hiroyuki
Tokyo 103-0027 (JP)**
• **MUKUDAI Jun
Tokyo 103-0027 (JP)**
• **ANDOH Hideki
Tokyo 103-0027 (JP)**
• **FUJINO Kenichi
Tokyo 103-0027 (JP)**

(74) Representative: **Becker, Eberhard
Becker & Kurig Partnerschaft
Patentanwälte PartmbB
Bavariastrasse 7
80336 München (DE)**

(54) **RESIN COMPOSITION, CURED MOLDED ARTICLE, FIBER-REINFORCED PLASTIC MOLDING MATERIAL, FIBER-REINFORCED PLASTIC, FIBER-REINFORCED PLASTIC LAMINATED MOLDED BODY, AND METHODS FOR PRODUCING SAME**

(57) This resin composition contains a first resin and a second resin, and exhibits curability by thermal crosslinking, wherein the first resin is at least one selected from among a bifunctional epoxy resin having a weight average molecular weight of 4,000 or more, and a phenoxy resin, and the second resin is a polycarbonate resin. The content ratio, by weight, of the first resin to the second resin (the first resin:the second resin) is preferably in the range of 9:1 to 2:8. Both the first resin and the second resin preferably have a bisphenol skeleton in a molecule.

**Description**

BACKGROUND

Technical Field

The present invention relates to a resin composition, a cured molded article using this resin composition, a fiber-reinforced plastic molding material, a fiber-reinforced plastic, a fiber-reinforced plastic laminated molded body, and methods for producing the same.

Related Art

As lightweight and high-strength materials, fiber-reinforced plastics (FRP) represented by carbon fiber-reinforced plastics (CFRP) are used in a wide range of applications from sporting goods such as bicycles, tennis rackets and the like to various members of automobiles, railroad vehicles, aircraft and the like.

A phenoxy resin which is a thermoplastic resin has good moldability and excellent adhesiveness, and is capable of exhibiting the same properties as a highly heat-resistant thermosetting resin by using a crosslinking agent. For example, a technique utilizing the phenoxy resin has been proposed, in which a phenoxy resin or a powder of a resin composition obtained by mixing a crystalline epoxy resin and an acid anhydride serving as a crosslinking agent with a phenoxy resin is applied to a reinforcing fiber base material by a powder coating method to produce a prepreg, and then the prepreg is molded and cured by heat pressing to produce a fiber-reinforced plastic (FRP) (Patent literature 1).

On the other hand, a polycarbonate resin which is a thermoplastic resin has excellent mechanical strength, heat resistance, and the like, and is widely used in industrial applications such as various electric and electronic devices, automobiles, and the like. In addition, a polycarbonate resin reinforced with glass fibers has excellent strength and rigidity, and is therefore used for housings of various electric and electronic devices and the like.

For the purpose of improving performances such as the mechanical strength of FRP, for example, a proposal has been made to mix a small amount of one or more hydroxy group-containing polymers selected from phenoxy resins or epoxy resins with a polycarbonate resin (Patent literature 2). In addition, a proposal has been made to mix a small amount of phenoxy resin with an aromatic polycondensation polymer such as polyarylether sulfone, polyarylether ketone, polycarbonate, polyetherimide, and the like (Patent literature 3). However, in Patent literature 2, sufficient mechanical strength cannot be obtained when the ratio of the hydroxy group-containing polymer in the resin component exceeds 50% by weight. In addition, in Patent literature 3, the concentration of the phenoxy resin is about 30% by weight or less of the total weight of the composition including the fibers, and is even smaller than that in Patent literature 2. In addition, Patent literature 3 does not have specific disclosure such as an example in which a phenoxy resin is added to a polycarbonate resin.

Meanwhile, in recent years, the use of thermoplastic resins has been actively studied in order to impart impact resistance, recyclability and the like to CFRP. For example, a proposal has been made to not only simply replace a matrix resin with a thermoplastic resin, but also blend fine particles of the thermoplastic resin in an epoxy resin matrix or arrange a thermoplastic resin film in an intermediate layer of CFRP (Patent literature 4).

In addition, a proposal has been made to arrange a layer containing a phenoxy resin as an adhesive layer on the outermost layer of CFRP using a thermoplastic resin (Patent literature 5), a CFRP molding material has also been proposed in which two different types of thermoplastic resins are arranged on each surface of a mat-like base material made of short reinforcing fibers (Patent literature 6), and other proposals have been made.

The polycarbonate resin described as a resin suitably used in Patent literatures 4 to 6 is characterized by having particularly excellent impact resistance among thermoplastic resins, but the polycarbonate resin has a disadvantage that the adhesiveness to other resins is slightly poor. Therefore, in applications for structural members, peeling may occur due to a stress from the outside and the strength of a structure may be significantly reduced, thus limiting the applications and application locations.

[Literature of related art]

[Patent literature]

Patent literature 1: International Publication WO2016/152856
Patent literature 2: Japanese Patent No. 2968388
Patent literature 3: National Publication of International Patent Application No. 2005-536597

Patent literature 4: Japanese Patent No. 6278286
Patent literature 5: International Publication WO2018/124215
Patent literature 6: Japanese Patent No. 5626330

SUMMARY

[Problems to be Solved]

An objective of the present invention is to provide a novel resin composition and applications thereof, the resin composition having excellent heat resistance and mechanical strength, and being useful as a material such as FRP or the like.

[Means to Solve Problems]

A resin composition of the present invention contains a first resin and a second resin different from the first resin, and exhibits curability by thermal crosslinking.

In the resin composition of the present invention, the first resin is one or more resins selected from a group consisting of a bifunctional epoxy resin having a weight average molecular weight of 4,000 or more and a phenoxy resin, and the second resin is a polycarbonate resin.

In the resin composition of the present invention, the content ratio of the first resin to the second resin (first resin:second resin) may be in the range of 9:1 to 3:7 in terms of weight ratio.

In the resin composition of the present invention, both the first resin and the second resin may have a bisphenol skeleton in a molecule.

In the resin composition of the present invention, a glass transition point temperature (Tg) measured by dynamic mechanical analysis (DMA) of a cured article obtained by thermally crosslinking the resin composition may be 100°C or higher, and the cured article may not have a melting point (Tm).

In the resin composition of the present invention, the displacement amount of a probe after measurement at a temperature of 25°C to 300°C in dynamic mechanical analysis (DMA) of a cured article obtained by thermally crosslinking the resin composition may be less than -1 mm with respect to the position before measurement.

A cured molded article of the present invention contains a cured article of any one of the above resin compositions.

A fiber-reinforced plastic molding material of the present invention contains a reinforcing fiber base material and a powder of any one of the above resin compositions that adheres to the reinforcing fiber base material.

A fiber-reinforced plastic of the present invention contains a reinforcing fiber base material and a cured article of any one of the above resin compositions that adheres to the reinforcing fiber base material.

In addition, a fiber-reinforced plastic laminated molded body of the present invention contains a phenoxy resin, a polycarbonate resin, and a reinforcing fiber, and consists of a plurality of layers. The fiber-reinforced plastic laminated molded body of the present invention includes one or more interlayer bonding portions in which a layer containing the phenoxy resin and a layer containing the polycarbonate resin are bonded by a crosslinking reaction at a lamination interface between the two layers.

In the fiber-reinforced plastic laminated molded body of the present invention, the layer containing the phenoxy resin and the layer containing the polycarbonate resin may be alternately laminated.

In the fiber-reinforced plastic laminated molded body of the present invention, the interlayer bonding portion in which resin layers are bonded by a crosslinking reaction may have an interlaminar shear strength of 40 MPa or more measured by an ILSS method.

In the fiber-reinforced plastic laminated molded body of the present invention, the reinforcing fiber may be a continuous fiber selected from at least one or more of a carbon fiber, a glass fiber, a ceramic fiber, a metal fiber, and an organic fiber.

A method for producing a fiber-reinforced plastic laminated molded body according to a first aspect of the present invention produces any one of the above fiber-reinforced plastic laminated molded bodies, the method including laminating a fiber-reinforced plastic molding material having a phenoxy resin as a matrix resin and a fiber-reinforced plastic molding material having a polycarbonate resin as a matrix resin, and performing a molding process at a temperature of 260°C or higher.

A method for producing a fiber-reinforced plastic laminated molded body according to a second aspect of the present invention produces any one of the above fiber-reinforced plastic laminated molded bodies, the method including

a step of preparing a plurality of fiber-reinforced plastic molding materials in which one surface of a reinforcing fiber base material is coated with a phenoxy resin and the other surface thereof is coated with a polycarbonate resin; and

a step of laminating the plurality of fiber-reinforced plastic molding materials so as to include a lamination boundary where the phenoxy resin and the polycarbonate resin come into contact with each other, and performing a molding process at a temperature of 260°C or higher.

In the method for producing a fiber-reinforced plastic laminated molded body according to the second aspect of the present invention, a fiber-reinforced plastic molding material having a phenoxy resin as a matrix resin and/or a fiber-reinforced plastic molding material having a polycarbonate resin as a matrix resin may be interposed and laminated among the plurality of fiber-reinforced plastic molding materials.

In the method for producing a fiber-reinforced plastic laminated molded body according to the second aspect of the present invention, a phenoxy resin film and/or a polycarbonate resin film may be interposed and laminated among the plurality of fiber-reinforced plastic molding materials.

A method for producing a fiber-reinforced plastic laminated molded body according to a third aspect of the present invention produces any one of the above fiber-reinforced plastic laminated molded bodies, the method including laminating a fiber-reinforced plastic molding material having a phenoxy resin as a matrix resin and a polycarbonate resin film, and performing a molding process at a temperature of 260°C or higher.

A method for producing a fiber-reinforced plastic laminated molded body according to a fourth aspect of the present invention produces any one of the above fiber-reinforced plastic laminated molded bodies, the method including laminating a fiber-reinforced plastic molding material having a polycarbonate resin as a matrix resin and a phenoxy resin film, and performing a molding process at a temperature of 260°C or higher.

A fiber-reinforced plastic molding material of the present invention includes: a reinforcing fiber base material; a phenoxy resin coating layer formed on one surface of the reinforcing fiber base material; and a polycarbonate resin coating layer formed on the other surface of the reinforcing fiber base material.

In the fiber-reinforced plastic molding material of the present invention, the reinforcing fiber base material may be a woven fabric made of continuous fibers or a UD material in which continuous fibers are drawn together in one direction.

[Effect]

According to the resin composition of the present invention, it is possible to provide a resin material having excellent heat resistance and mechanical strength. Therefore, the resin composition of the present invention can be preferably used for producing various resin molded bodies that require heat resistance and strength, and composite materials such as FRP and the like.

BRIEF DESCRIPTION OF THE DRAWINGS

FIG. 1 is a diagram illustrating an outline of a method for producing a FRP laminated molded body according to an embodiment of the present invention.
FIG. 2 is a diagram illustrating an outline of a method for producing a FRP laminated molded body according to another embodiment of the present invention.
FIG. 3 is a diagram illustrating an outline of a method for producing a FRP laminated molded body according to still another embodiment of the present invention.
FIG. 4 is a diagram illustrating an outline of a method for producing a FRP laminated molded body according to further still another embodiment of the present invention.
FIG. 5 is a diagram showing measurement results of the viscosities of resin compositions obtained in examples and comparative examples.

DESCRIPTION OF THE EMBODIMENTS

Hereinafter, embodiments of the present invention are described in detail.

[Resin composition]

A resin composition of the embodiment contains a first resin and a second resin different from the first resin and exhibits curability by thermal crosslinking.

The first resin is one or more resins selected from a bifunctional epoxy resin having a weight average molecular weight of 4,000 or more (hereinafter, also referred to as "bifunctional epoxy resin") and a phenoxy resin. The second resin is a polycarbonate resin.

The resin composition of the embodiment contains either one or both of the first resin and the second resin as a main component. Here, the "main component" refers to a component which is the most abundant among the resin components. In order to exhibit the effects of the invention, in the resin composition of the embodiment, the total amount of the first resin and the second resin is preferably 50 parts by weight or more, and more preferably 80 parts by weight or more and 100 parts by weight or less with respect to 100 parts by weight of the total resin components. Moreover, the "resin components" include a thermoplastic resin or a thermosetting resin other than a bifunctional epoxy resin, a phenoxy resin, and a polycarbonate resin, but excludes a non-resin component such as a crosslinking agent or the like.

<Bifunctional epoxy resin>

More specifically, the bifunctional epoxy resin serving as the first resin and having a weight average molecular weight of 4,000 or more is an epoxy resin which is a linear high molecular weight body having a weight average molecular weight (Mw) of 4,000 or more and less than 10,000, and has epoxy groups at both terminals of the molecular chain. An epoxy resin having a Mw of less than 4,000 is not suitable because this epoxy resin has a low softening point and is therefore more prone to blocking, making workability during kneading and handling of the resin composition difficult. In addition, the bifunctional epoxy resin having a Mw of 10,000 or more is generally treated as a thermoplastic resin referred to as a phenoxy resin described later.

It should be noted that the Mw is a value measured by gel permeation chromatography and converted using a standard polystyrene calibration curve.

The bifunctional epoxy resin serving as the first resin may be any linear bifunctional epoxy resin having a weight average molecular weight of 4,000 or more as described above, and is not particularly limited to the conventionally known bifunctional epoxy resins. However, the bifunctional epoxy resin serving as the first resin is preferably a bifunctional epoxy resin having a softening point of 90°C or higher and a bisphenol skeleton. Furthermore, the softening point of the bifunctional epoxy resin is preferably 100°C or higher, and more preferably 110°C or higher.

The bifunctional epoxy resin having a bisphenol skeleton may be: a bisphenol A epoxy resin (for example, Epotohto YD-014, YD-017, YD-019 manufactured by NIPPON STEEL Chemical & Material Co., Ltd., JER1010 manufactured by Mitsubishi Chemical Co., Ltd., etc.), a bisphenol F epoxy resin (for example, Epotohto YDF-2005RL manufactured by NIPPON STEEL Chemical & Material Co., Ltd., JER4007P, JER4009P manufactured by Mitsubishi Chemical Co., Ltd., etc.), a bisphenol sulfide type epoxy resin (for example, YSLV-120TE manufactured by NIPPON STEEL Chemical & Material Co., Ltd., etc.), and the like, but the present invention is not limited hereto, and two or more of these epoxy resins may be mixed and used.

Moreover, although the bifunctional epoxy resin that is a high molecular weight body and the phenoxy resin, which are suitable as the first resin, have almost the same chemical structure, they are distinguished in the following points.

(1) The phenoxy resin has a Mw of 10,000 or more (more generally, a Mw of 40,000 or more), whereas the epoxy resin has a Mw of less than 10,000 (more generally, a Mw of 4,000 to about 6,000).
(2) The bifunctional epoxy resin that is a high molecular weight body has an epoxy equivalent of 700 to 5,000 g/eq, which is the number of grams of epoxy groups contained in one gram equivalent of the resin, whereas the phenoxy resin has an epoxy equivalent of 6,000 g/eq.
(3) The phenoxy resin has strong properties as a thermoplastic resin due to its large Mw, and is normally used without the need for a curing agent, whereas the bifunctional epoxy resin that is a high molecular weight body requires a curing agent in normal use. However, when the bifunctional epoxy resin is used in the resin composition of the embodiment, no curing agent is used.

<Phenoxy resin>

The phenoxy resin serving as the first resin is a thermoplastic polyhydroxy polyether resin obtained by a condensation reaction between a divalent phenol compound and epihalohydrin or a polyaddition reaction between a divalent phenol compound and a bifunctional epoxy resin, and can be obtained by a conventionally known method in a solvent or in the absence of a solvent.

It is preferable that the phenoxy resin preferably used in the present invention is solid at room temperature and has a melt viscosity of 3,000 Pa·s or less at a temperature of 200°C or higher. The melt viscosity is more preferably 2,000 Pa·s or less, further preferably 1,500 Pa·s or less, and most preferably 1000 Pa·s or less. A melt viscosity exceeding 3,000 Pa·s is not preferable because the fluidity of the resin during a molding process decreases and the resin does not spread sufficiently and causes voids.

The divalent phenolic compound used in the production of phenoxy resins may be, for example, hydroquinone, resorcin, 4,4-dihydroxybiphenyl, 4,4'-dihydroxydiphenylketone, 2,2-bis(4-hydroxyphenyl)propane (bisphenol A), 1,1-bis(4-hydroxyphenyl)cyclohexane, 1,1-bis(4-hydroxyphenyl)-3,3,5-trimethylcyclohexane, bis(4-hydroxyphenyl)methane, 1,1-bis(4-hydroxyphenyl)ethane, 2,2-bis(4-hydroxyphenyl)butane, 1,1-bis(4-hydroxyphenyl)-1-phenylethane, bis(4-hydroxyphenyl)diphenylmethane, 2,2-bis(4-hydroxy-3-methylphenyl)propane, 2,2-bis(3-phenyl-4-hydroxyphenyl)propane, 2,2-bis(4-hydroxy-3-tert-butylphenyl)propane, 1,3-bis(2-(4-hydroxyphenyl)propyl)benzene, 1,4-bis(2-(4-hydroxyphenyl)propyl)benzene, 2,2-bis(4-hydroxyphenyl)-1,1,1-3,3,3-hexafluoropropane, 9,9'-bis(4-hydroxyphenyl)fluorene, and the like. Among these compounds, 4,4-dihydroxybiphenyl, 4,4'-dihydroxydiphenylketone, 2,2-bis(4-hydroxyphenyl)propane (bisphenol A), or 9,9'-bis(4-hydroxyphenyl)fluorene is particularly preferable.

In addition, the bifunctional epoxy resins used in the production of phenoxy resins include epoxy oligomers obtained by the condensation reaction between the above divalent phenol compound and epihalohydrin, for example, hydroquinone diglycidyl ether, resorcin diglycidyl ether, a bisphenol S epoxy resin, a bisphenol A epoxy resin, a bisphenol F epoxy resin, methylhydroquinone diglycidyl ether, chlorohydroquinone diglycidyl ether, 4,4'-dihydroxydiphenyloxide diglycidyl ether, 2,6-dihydroxynaphthalene diglycidyl ether, dichlorobisphenol A diglycidyl ether, a tetrabromobisphenol A epoxy resin, 9,9'-bis(4-hydroxyphenyl)fluorene glicidyl ether, and the like. In particular, a bisphenol A epoxy resin, a bisphenol S epoxy resin, hydroquinone diglycidyl ether, a bisphenol F epoxy resin, a tetrabromobisphenol A epoxy resin, or 9,9'-bis(4-hydroxyphenyl)fluorene glicidyl ether is preferable.

The production of phenoxy resins can be performed without a solvent or in the presence of a reaction solvent. As the reaction solvent, an aprotic organic solvent such as methyl ethyl ketone, dioxane, tetrahydrofuran, acetophenone, N-methylpyrrolidone, dimethyl sulfoxide, N,N-dimethylacetamide, sulfolane and the like can be suitably used. In addition, the phenoxy resin obtained by the solvent reaction can be made into a solid resin containing no solvent by being subjected to a solvent removal treatment. In addition, in the production of phenoxy resins, conventionally known polymerization catalysts such as alkali metal hydroxides, tertiary amine compounds, quaternary ammonium compounds, tertiary phosphine compounds, quaternary phosphonium compounds and the like can be suitably used as the reaction catalyst.

The average molecular weight of the phenoxy resin in the form of the weight average molecular weight (Mw) is usually 10,000 to 200,000, preferably 20,000 to 100,000, more preferably 30,000 to 100,000, and most preferably 40,000 to 80,000. If the Mw of the phenoxy resin is too low, the strength of the molded body may be inferior, and if the Mw is too high, the workability and processability tend to be inferior. The Mw is a value measured by gel permeation chromatography and converted using a standard polystyrene calibration curve.

A hydroxyl group equivalent (g/eq) of the phenoxy resin is usually 1000 or less, preferably 750 or less, and particularly preferably 500 or less. More specifically, the hydroxyl group equivalent (g/eq) of the phenoxy resin is usually 50 to 1,000, preferably 100 to 750, and particularly preferably 200 to 500. If the hydroxyl group equivalent is too low, there is a concern that the mechanical properties deteriorate because the water absorption rate increases due to an increase in the number of hydroxyl groups. If the hydroxyl group equivalent is too high, there is a concern that the crosslinking density is insufficient and the heat resistance of the cured article is reduced, and thus it is not preferable. In addition, if the hydroxyl group equivalent is too high, the number of hydroxyl groups is small, so that the wettability with a reinforcing fiber base material, particularly with a carbon fiber is reduced, and thus a sufficient reinforcing effect cannot be expected during carbon fiber reinforcement. Here, the hydroxyl group equivalent in the present specification means a secondary hydroxyl group equivalent. Moreover, a polymer chain terminal functional group of the phenoxy resin may have either or both of an epoxy group and a hydroxyl group.

A glass transition temperature (Tg) of the phenoxy resin is suitably 65°C or higher and 200°C or lower, preferably 180°C or lower, and more preferably in the range of 65°C to 180°C. If the Tg of the phenoxy resin is higher than 200°C, the melt viscosity becomes high, and it is difficult to impregnate the reinforcing fiber base material with the resin composition of the embodiment without defects such as voids when the phenoxy resin is applied to FRP for example. In addition, if the Tg exceeds 200°C, the fluidity of the resin during a molding process becomes low and the process is required to be performed at a higher temperature, and thus it is not very preferable. On the other hand, the lower limit of Tg is not particularly limited as long as there is no problem in processability, and there is no problem if the temperature is about 65°C. If the glass transition temperature is lower than 65°C, the moldability is improved, but the tensile elastic modulus retention rate and the size change rate retention rate may decrease. Moreover, the glass transition temperature of the phenoxy resin is a numerical value obtained from a peak value of the second scan, measured in the range of 20 to 280°C under a temperature rise condition of 10°C/min using a differential scanning calorimetry device.

Commercially available phenoxy resins can be used. For example, bisphenol A phenoxy resins (for example, Phenotohto YP-50, Phenotohto YP-50S, Phenotohto YP-55U manufactured by NIPPON STEEL Chemical & Material Co., Ltd.), bisphenol F phenoxy resins (for example, Phenotohto FX-316 manufactured by NIPPON STEEL Chemical & Material Co., Ltd.), bisphenol A and bisphenol F copolymerized phenoxy resins (for example, YP-70 manufactured by NIPPON STEEL Chemical & Material Co., Ltd.), special phenoxy resins such as brominated phenoxy resins, phosphorus-containing phenoxy resins, and sulfone-containing phenoxy resins (for example, phenotohto YPB-43C, phenotohto FX293, YPS-007 manufactured by NIPPON STEEL Chemical & Material Co., Ltd., etc.) other than the phenoxy resins above, and the like. These resins can be used alone, or two or more types of the resins can be used in combination.

<Polycarbonate resin>

The polycarbonate resin serving as the second resin is obtained by, for example, making a divalent phenol or a divalent phenol and a small amount of polyhydroxy compound react with a carbonate precursor.

The method for producing the polycarbonate resin is not particularly limited, and polycarbonate resins produced by a conventionally known phosgene method (interfacial polymerization method) or melting method (transesterification method) can be used.

Among these polycarbonate resins, an aromatic polycarbonate resin obtained using an aromatic dihydroxy compound as a raw material is preferable in consideration of compatibility with a bifunctional epoxy resin or a phenoxy resin. The aromatic dihydroxy compound may be, for example, 2,2-bis(4-hydroxyphenyl)propane (bisphenol A), bis(4-hydroxyphenyl)methane, 1,1-bis(4-hydroxyphenyl)ethane, 2,2-bis(4-hydroxyphenyl)butane, 4,4'-dihydroxydiphenyl ether, 4,4'-dihydroxy-3,3'-dimethyldiphenyl ether, bis(4-hydroxyphenyl)phenylmethane, 2,2-bis(4-hydroxyphenyl-3-methylphenyl)propane, 1,1-bis(4-hydroxy-3-tert-butylphenyl)propane, 1,1-bis(4-hydroxyphenyl)cyclopentane, 1,1-bis(4-hydroxyphenyl)cyclohexane, 4,4'-dihydroxydiphenylsulfone, 4,4'-dihydroxy-3,3'-dimethyldiphenylsulfone, 4,4'-dihydroxydiphenylsulfide, 4,4'-dihydroxydiphenylsulfoxide, 4,4'-dihydroxy-3,3'-dimethyldiphenylsulfoxide, 2,2-bis(4-hydroxy-3-bromophenyl)propane, 2,2-bis(4-hydroxy-3,5-dibromophenyl)propane, 2,2-bis(4-hydroxy-3,5-dichlorophenyl)propane, and the like. These compounds can be used alone, or one or more of the compounds can be used in combination.

In addition, the carbonate precursor may be carbonyl halide, carbonyl ester, haloformate or the like, and specific examples thereof include phosgene, diphenyl carbonate, dihaloformate of a divalent phenol and a mixture thereof. In the production of polycarbonate resins, an appropriate molecular weight modifier, a catalyst for accelerating the reaction, and the like can also be used. Two or more of the aromatic polycarbonate resins thus obtained may be mixed.

The polycarbonate resin may be linear or branched. To obtain a branched polycarbonate resin, a part of the above-mentioned divalent phenol may be substituted by, for example, the following branching agents, that is, polyhydroxy compounds such as phloroglucin, 4,6-dimethyl-2,4,6-tri(4-hydroxyphenyl)heptene-2, 4,6-dimethyl-2,4,6-tri(4-hydroxyphenyl)heptane, 2,6-dimethyl-2,4,6-tri(4-hydroxyphenyl)heptene-3, 1,3,5-tri(4-hydroxyphenyl)benzene, 1,1,1-tri(4-hydroxyphenyl)ethane and the like; and compounds such as 3,3-bis(4-hydroxyaryl)oxindole (= isatin bisphenol), 5-chloroisatin, 5,7-dichloroisatin, 5-bromoisatin and the like. The used amount of these substituting compounds is usually 0.01 to 10 mol%, and preferably 0.1 to 2 mol% with respect to the divalent phenol.

Among the above-mentioned polycarbonate resins, a polycarbonate resin derived from 2,2-bis(4-hydroxyphenyl)propane, or a polycarbonate copolymer derived from 2,2-bis(4-hydroxyphenyl)propane and other dihydroxy compounds is preferable. In addition, a copolymer mainly composed of a polycarbonate resin, such as a copolymer of a polycarbonate resin with a polymer or oligomer having a siloxane structure, and other copolymers may be used.

When the melting method is used to obtain the polycarbonate resin, the amount of OH groups at the terminals of the polymer chain can be adjusted, but the terminal structure of the polycarbonate resin is not particularly limited in the present invention. Therefore, the terminal group may be left as it is or sealed with a terminal sealant, and the sealing may be performed at one terminal or both terminals.

A weight average molecular weight (Mw) of the polycarbonate resin is not particularly limited, and is preferably in the range of 10,000 to 250,000, more preferably in the range of 15,000 to 200,000, and most preferably in the range of 15,000 to 100,000, from the viewpoint of ensuring the mechanical strength of the molded body. If the Mw of the polycarbonate resin is too low, the mechanical properties and heat resistance of the molded body may be inferior, and if the Mw is too high, the workability and processability tend to be inferior. If the Mw is less than 10,000, the strength of the molded body is inferior, and if the Mw is too high, the workability and processability tend to be inferior. Moreover, the Mw is a value measured by gel permeation chromatography and converted using a standard polystyrene calibration curve.

The polycarbonate resin preferably used in the present invention is solid at room temperature, and the melt viscosity at a temperature of 260°C or higher, for example, 280°C, is preferably 3,000 Pa·s or less, more preferably 2,000 Pa·s or less, and further preferably 1,500 Pa·s or less. A melt viscosity exceeding 3,000 Pa·s is not preferable because the fluidity of the resin during a molding process decreases and the resin does not spread sufficiently and causes voids, or the impregnation property becomes insufficient, resulting in insufficient appearance and mechanical strength. The lower limit of the melt viscosity is preferably higher than 100 Pa·s, more preferably 300 Pa·s or more, and most preferably 500 Pa·s or more. When the melt viscosity is 100 Pa·s or less, there is a case in which the mechanical strength such as bending properties and the like cannot be sufficiently obtained because the matrix resin becomes brittle.

A glass transition temperature (Tg) of the polycarbonate resin may be 200°C or lower, preferably in the range of 140°C to 170°C., and further preferably in the range of 145°C to 165°C. If the Tg of the polycarbonate resin is higher than 200°C, the melt viscosity becomes high, and it is difficult to impregnate the reinforcing fiber base material with the resin composition of the embodiment without defects such as voids when the polycarbonate resin is applied to FRP for example. On the other hand, the lower limit of Tg is not particularly limited as long as there is no problem in processability, but it seems that the Tg should be about 140°C or higher.

In addition, a melting point (Tm) of the polycarbonate resin may be in the range of 200 to 300°C, preferably 220 to 280°C, and more preferably 240 to 260°C, although a very clear Tm is not shown. If the melting point is less than 200°C, the crosslinking reaction may start in a state that the impregnation into the reinforcing fiber base material is insufficient when the polycarbonate resin is applied to FRP for example. If the melting point exceeds 300°C, a molding machine with high-temperature specifications is required during the process.

<Composition ratio>

In the resin composition, preferably, the content ratio of the first resin to the second resin (first resin:second resin) is in the range of 9:1 to 3:7 in terms of weight ratio. Within this composition ratio, excellent heat resistance and mechanical properties are exhibited in a cured article obtained by curing the resin composition by thermal crosslinking. From this viewpoint, the content ratio (first resin:second resin) is more preferably in the range of 9:1 to 4:6, further preferably in the range of 8:2 to 4:6, and most preferably in the range of 8:2 to 5:5. If the content ratio (first resin:second resin) deviates from 3:7 and the first resin is less or the content ratio deviates from 9:1 and the second resin is less, the crosslinking density of a crosslinked cured article of the first resin and the second resin is reduced, and thus the effect of significantly improving the heat resistance and mechanical strength cannot be obtained.

A particularly preferable combination of the first resin and the second resin is desirably a combination in which both the first resin and the resin second have a bisphenol skeleton in a molecule. Because both the first resin and the second resin have a bisphenol skeleton in a molecule, the compatibility is enhanced and a uniform cured article is likely to be obtained.

<Optional component>

The resin composition of the embodiment can contain a thermoplastic resin or a thermosetting resin other than the bifunctional epoxy resin, the phenoxy resin and the polycarbonate resin as an optional component, to the extent that the effects of the invention are not impaired.

The thermoplastic resin serving as an optional component is not particularly limited in properties thereof such as crystalline and non-crystalline. For example, one or more of the following compounds can be used: polyolefin and an acid-modified product thereof, polystyrene, polymethylmethacrylate, an AS resin, an ABS resin, thermoplastic aromatic polyester such as polyethylene terephthalate and polybutylene terephthalate, polyimide, polyamide, polyamide imide, polyether imide, polyether sulfone, polyphenylene ether and a modified product thereof, polyphenylene sulfide, polyoxymethylene, polyarylate, polyether ketone, polyether ether ketone, polyether ketone ketone, and the like.

In addition, as the thermosetting resin serving as an optional component, for example, one or more resins selected from a vinyl ester resin, a phenol resin, a urethane resin and the like can be preferably used.

However, because it is necessary to impart excellent heat resistance and mechanical strength to the cured article of the resin composition, the total amount of other thermoplastic resins or thermosetting resins serving as optional components is preferably less than 50 parts by weight and more preferably 0 to 20 parts by weight or less, with respect to 100 parts by weight of the total amount of the resin components. If the total amount of resins serving as optional components is 50 parts by weight or more, the effects of the invention may be impaired.

In addition, the resin composition of the embodiment may contain, for example, an organic solvent, a crosslinking agent, an inorganic filler, an extender pigment, a colorant, an antioxidant, an ultraviolet ray inhibitor, a flame retardant, a flame retardant auxiliary and the like as optional components, to the extent that the effects of the invention are not impaired.

<Form of resin composition>

The resin composition of the embodiment can take any form such as solid and powdered granular forms, and can be in a liquid form by using an appropriate solvent. A solvent capable of dissolving the first resin and the second resin may be, for example, methanol, ethanol, butanol, dichloromethane, chloroform, tetrahydrofuran, toluene, xylene, acetone, ethyl acetate, dimethylformamide, N-methyl-2-pyrrolidone, dimethylacetamide, and the like.

The resin composition has a melt viscosity of 3000 Pa·s or less in a temperature range of less than 260°C. If the melt viscosity in the temperature range of less than 260°C exceeds 3000 Pa·s, a decrease in the fluidity of the resin composition causes voids after the process, and thus it is not preferable.

In addition, the melt viscosity of the resin composition in a temperature range of 260°C or higher, preferably 280°C or higher, is in the range of 8,000 Pa·s or more, preferably 10,000 to 1,000,000 Pa·s, and more preferably 20,000 to 1,000,000 Pa·s. The resin composition starts to thicken from a temperature exceeding the melting point (about 250°C) of the polycarbonate resin by 10 to 20°C, and the viscosity rapidly increases at a temperature of 260°C or higher and reaches the range of 10,000 Pa·s.

Moreover, from the viewpoint of a molding process, regarding the increase in the melt viscosity of the resin composition, the melt viscosity preferably reaches 10,000 Pa·s or more within 30 minutes, and more preferably reaches 10,000 Pa·s or more within 20 minutes at a temperature of 280°C for example.

As described above, the resin composition behaves like a thermosetting resin by thermal crosslinking, and is cured in a temperature range of 260°C or higher to form a cured article. That is, although the first resin and the second resin constituting the resin composition are both thermoplastic resins, they exhibit characteristic behaviours of being irreversibly cured and then becoming nearly infusible by heating the resin composition to a temperature of 260°C or higher, for example, a temperature within the range of 280 to 320°C, preferably 280 to 300°C. Although the curing mechanism in this case is not yet clear, it is presumed that the resin composition is cured because a transesterification reaction occurs due to a main secondary hydroxyl group contained in the bifunctional epoxy resin or the phenoxy resin and an ester group contained in the polycarbonate resin, and crosslinking between the bifunctional epoxy resin chain or the phenoxy resin chain and the polycarbonate resin chain is formed to obtain a three-dimensional network structure.

<Preparation of resin composition>

The resin composition of the embodiment can be easily prepared by mixing the first resin and the second resin, and further mixing optional components if necessary. The mixing method is not particularly limited, and examples thereof include a method of mixing (dry blending) the first resin and the second resin in a powdered granular state, a method of mixing while heat-melting the first resin and the second resin, a method of dissolving and mixing the first resin and the second resin in a solvent, and other methods.

In addition, when each component is mixed, for example, various blenders or mixers, dry mills, uniaxial or biaxial ruders, kneaders and the like can be appropriately selected and used according to the mixing form. Moreover, when kneading is performed while heat-melting is performed, it is preferable to carry out the kneading at a temperature at which the cured article described later is not formed. If the temperature is raised while the first resin and the second resin are kneaded, thickening starts from a temperature exceeding the melting point (about 250°C) of the polycarbonate resin by 10 to 20°C, and thus the temperature of kneading (kneading in an uncured state) for preparing the resin composition is, for example, preferably 240°C or lower, and more preferably in the range of 200 to 240°C.

[Cured article and cured molded article]

The cured article of the embodiment is obtained by curing the above resin composition by thermal crosslinking. The cured article of the embodiment is obtained by a heat treatment of the resin composition at a temperature of 260°C or higher, preferably 280°C or higher. In the heat treatment, the resin composition can also be molded into a desired shape by, for example, compression molding, injection molding using uniaxial or biaxial ruders, kneaders and the like, extrusion molding, and the like.

Moreover, because the resin composition is cured by crosslinking reaction and loses its fluidity, the time from melting to molding is, for example, within 20 minutes, preferably within 10 minutes after the temperature reaches 280°C.

The cured article of the embodiment has a glass transition point temperature (Tg) of 100°C or higher measured by dynamic mechanical analysis (DMA). For example, in the DMA of the cured article, when the blending amount of the bifunctional epoxy resin or the phenoxy resin (first resin) is larger than that of the polycarbonate resin (second resin) (the content ratio of the phenoxy resin to the polycarbonate resin is 8:2 or 9:1), the Tg of the first resin (for example, about 110 to 120°C) is detected, but the Tg of the second resin (for example, about 160 to 170°C) is not detected and has been confirmed to disappear. The Tg of the cured article shifts to the higher temperature side as the blending amount of the second resin increases, and is close to the Tg of the polycarbonate resin used alone as the second resin.

Moreover, regarding the Tg of the cured article, when the temperature of the thermal crosslinking is lower than 280°C, the peak of the tanδ indicating the Tg of the first resin and the peak of the tanδ indicating the Tg of the second resin are separated, and the Tg of the cured article becomes a clear bimodal peak at least at 240°C or less.

In addition, the cured article has been confirmed to exhibit behaviours in which a storage elastic modulus E' and a loss elastic modulus E" of the cured article are greatly increased as compared with the single first resin or the single second resin, and the storage elastic modulus E' is stable even at a temperature range higher than the Tm of the polycarbonate resin. The cured article of the resin composition of the present invention does not have a melting point and maintains a solid state even when heated.

In addition, regarding the cured article of the embodiment, in the DMA, the displacement amount of a probe after measurement is less than -1 mm with respect to the position before measurement at a temperature in the range of 25°C to 300°C. That is, it means that the cured article does not melt or soften even at 300°C, and has high heat resistance.

As described above, the cured article of the embodiment is excellent in heat resistance and mechanical strength.

Therefore, the cured molded article molded into various shapes can be used for various applications such as aircraft parts, automobile parts, electrical and electronic parts, building members, various containers, sporting goods, daily necessities, household goods, sanitary goods, and the like. In particular, the cured molded article can be preferably used for various applications that require heat resistance and mechanical strength, such as engine peripheral parts of aircrafts, aircraft parts, body parts and engine peripheral parts of automobiles, intake/exhaust system parts, engine cooling water system parts, housing parts of notebook PCs, tablets, smartphones and the like, electrical and electronic device members such as heat dissipation members for LED lighting, and the like.

In addition, the cured article of the embodiment can also be preferably used as, for example, a matrix resin in a fiber-reinforced plastic. In this case, because the cured article has excellent adhesiveness derived from the first resin and also has affinity with fibers, the impregnation property for the reinforcing fiber base material is good regardless of the presence or absence of a sizing treatment, and thus a fiber-reinforced plastic having excellent mechanical strength can be obtained.

[Fiber-reinforced plastic molding material]

A fiber-reinforced plastic molding material of the embodiment (hereinafter, also referred to as "FRP molding material") contains a reinforcing fiber base material and a powder of the resin composition that adheres to the reinforcing fiber base material.

In the FRP molding material of the embodiment, the reinforcing fiber is not particularly limited and is preferably, for example, a carbon fiber, a boron fiber, a silicon carbide fiber, a glass fiber, an aramid fiber and the like, and more preferably a carbon fiber. Regarding the type of the carbon fiber, for example, either a PAN-based carbon fiber or a pitch-based carbon fiber can be used, and the two types of carbon fiber may be used alone or in combination depending on the purpose and application. In addition, as the reinforcing fiber base material, for example, a non-woven fabric base material using a chopped fiber, a cloth material using a continuous fiber, a unidirectional reinforcing fiber base material (UD material), or the like can be used, but from the viewpoint of reinforcing effects, it is preferable to use a cloth material or a UD material. When a cloth material or a UD material is used, it is preferable that fibers called filaments are subjected to opening processing.

The basis weight of the reinforcing fiber base material is preferably in the range of 40 to 250 g/m$^2$. When the basis weight is less than 40 g/m$^2$, the desired mechanical properties cannot be obtained due to the small number of reinforcing fibers in the molded body. In addition, when the basis weight exceeds 250 g/m$^2$, it becomes difficult to sufficiently impregnate the inside of the reinforcing fiber base material with resin, and thus it is not preferable.

Moreover, the reinforcing fiber base material can be used regardless of the presence or absence of a sizing treatment.

In the FRP molding material of the embodiment, the resin composition is adhered to the reinforcing fiber base material in a powder state. The FRP molding material is preferably prepared by, for example, a powder coating method in which a fine powder of a resin composition is adhered to a reinforcing fiber base material. In the powder coating method, the raw material resin composition is a fine particle and therefore melts easily, and appropriate air-gaps included in the coating film after coating allow air to escape, so that voids are less likely to occur in the molten resin.

The powder coating methods mainly include, for example, an electrostatic coating method, a fluidized bottom method, and a suspension method. Among these methods, the electrostatic coating method and the fluidized bottom method are methods suitable for thermoplastic resins, and are preferable due to simple steps and good productivity. In particular, the electrostatic coating method is the most suitable method due to good uniformity in the adhesion of a fine powdered raw material resin composition to a reinforcing fiber base material.

The average particle size of the fine powdered raw material resin composition used in the powder coating method is, for example, preferably in the range of 10 to 100 μm, more preferably in the range of 40 to 80 μm, and most preferably in the range of 40 to 50 μm. If the average particle size of the fine powder exceeds 100 μm, the energy when the fine powder collides with the fiber increases, and the adhesion rate to the reinforcing fiber base material is reduced in powder coating in an electrostatic field. In addition, if the average particle size of the fine powder is less than 10 μm, the particles are scattered due to an accompanying airflow and the adhesion efficiency may decrease, and the fine powder of the raw material resin floating in the atmosphere may cause deterioration of the work environment. Pulverization mixers such as a low temperature drying pulverizer (centrifugal force dryer add mill) and the like are suitably used to make the raw material resin into fine powders, but it is not limited thereto. In addition, when the raw material resin is pulverized, a plurality of components serving as raw materials may be pulverized and then mixed, or a plurality of components may be blended in advance and then pulverized.

In the powder coating, it is preferable to apply the fine powder of the raw material resin to the reinforcing fiber base material in a manner that the amount of fine powders adhered to the reinforcing fiber base material (resin ratio: RC) is, for example, in the range of 20 to 50%, more preferably in the range of 25 to 45%, and further preferably in the range of 25 to 40%. If the RC exceeds 50%, the mechanical properties such as a tensile and bending elastic modulus of CFRP decrease. If the RC is less than 20%, the impregnation of the raw material into the reinforcing fiber base material may be insufficient because the adhesion amount of the raw material resin is extremely small, and both the thermal properties and the mechanical properties may become low.

[Fiber-reinforced plastic]

A fiber-reinforced plastic of the embodiment (hereinafter, also referred to as "FRP") contains a reinforcing fiber base material and a cured article of the resin composition serving as a matrix resin that adheres to the reinforcing fiber base material.

The method for producing FRP is not particularly limited and may be, for example, an impregnation method, a film stack method, or the like, but it is preferable to prepare a FRP molding material (prepreg) having the resin composition of the above embodiment by a heat-pressure treatment. In the heat-pressure treatment, the powdered granular raw material resin composition is completely melted to a liquid state by heating and permeates into the prepreg by pressurization. However, because the escape route for air is secured in the prepreg controlled to a predetermined air permeability, the molten resin permeates while expelling the air, the impregnation can be completed in a short time even at a relatively low pressure, and the generation of voids can also be avoided.

It is preferable that a fiber volume content (Vf) of reinforcing fibers in the FRP of the present invention is in the range of 40 to 65%. The Vf is adjusted according to the application of the FRP, and is more preferably 45 to 65% and further preferably 45 to 60%. If the Vf exceeds 65%, the amount of matrix resin is insufficient, and the strength of the FRP decreases. Moreover, if the Vf is less than 40%, the reinforcing effect of the reinforcing fibers is reduced.

In order to completely melt the fine powder of the raw material resin composition so as to thoroughly impregnate the reinforcing fiber base material, the heat-pressure treatment is preferably performed at a temperature in the range of approximately 230°C to 350°C, which is equal to or higher than the melting point of the polycarbonate resin used as the second resin. Within this temperature range, a temperature higher than the melting point (Tm) of the polycarbonate resin used as the second resin by 10 to 60°C is more preferable. If the temperature of the heat-pressure treatment exceeds an upper limit temperature, the resin may be decomposed because excessive heat is applied. If the temperature is lower than a lower limit temperature, not only the impregnation into the reinforcing fiber base material may be insufficient because the melt viscosity is high, but also a cured article having the desired strength and heat resistance cannot be obtained because the crosslinking reaction between the first resin and the second resin does not occur.

Moreover, when the melting point of the polycarbonate resin used as the second resin cannot be clearly confirmed, the glass transition temperature (Tg) + 100°C or higher is a guideline for the temperature of the heat-pressure treatment.

The pressure of the heat-pressure treatment is, for example, preferably 3 MPa or more, and more preferably in the range of 3 to 5 MPa. If the pressure exceeds an upper limit, deformations or damages may be caused because excessive pressure is applied. If the pressure is lower than a lower limit, the impregnation property for the reinforcing fiber base material deteriorates.

The time of the heat-pressure treatment is preferably at least 5 minutes or more, and more preferably in the range of 5 to 20 minutes.

It is also possible to perform a molding treatment for molding the material into a predetermined shape at the same time as the heat-pressure treatment. In the molding treatment, it is also possible to quickly set a material that has been heated to a predetermined temperature in advance in a low-temperature pressure molding machine to perform a process. In addition, after the heat-pressure treatment, an arbitrary treatment such as post curing or the like can also be performed. The post curing is preferably performed at a temperature of, for example, 260°C or higher, preferably 280°C or higher, over a period of about 10 to 30 minutes.

[Fiber-reinforced plastic laminated molded body]

A fiber-reinforced plastic laminated molded body according to one embodiment of the present invention (hereinafter, also referred to as "FRP laminated molded body") contains a phenoxy resin, a polycarbonate resin, and a reinforcing fiber. In the FRP laminated molded body of the embodiment, the phenoxy resin and the polycarbonate resin are laminated in layers, and one or more interlayer bonding portions are included in which a layer containing the phenoxy resin (hereinafter, also referred to as "phenoxy resin-containing layer") and a layer containing the polycarbonate resin (hereinafter, also referred to as "polycarbonate resin-containing layer") are bonded by a crosslinking reaction at a lamination interface between the two layers. The FRP laminated molded body of the embodiment preferably has an interlaminar shear strength of 40 MPa or more measured by an ILSS method.

The ILSS method is a method for evaluating the interlaminar shear strength specified in JIS K 7078, and the FRP laminated molded body of the embodiment has an interlaminar shear strength of 40 MPa or more measured by this method. Generally, the FRP laminated molded body is manufactured by laminating a plurality of sheet-shaped FRP molding materials called prepregs and performing heat-pressure molding using a heat press machine, an autoclave, or the like. If the interlaminar shear strength is less than 40 MPa, the FRP laminated molded body delaminates under an external stress, and the strength of the FRP laminated molded body is significantly reduced. Moreover, if the interlaminar shear strength is too high, the impact resistance may be lowered. Therefore, the interlaminar shear strength is preferably in the range of 40 to 65 MPa, and more preferably in the range of 45 to 60 MPa.

The FRP laminated molded body of the embodiment preferably contains a matrix resin in which a phenoxy resin and a polycarbonate resin are laminated in layers. The lamination state can be of any structure depending on desired properties of the FRP laminated molded body, and may be a state in which the phenoxy resin-containing layer and the polycarbonate resin-containing layer are alternately laminated or randomly laminated. When the phenoxy resin-containing layer and the polycarbonate resin-containing layer are randomly laminated, the layers may be laminated so that the FRP laminated molded body include at least one or more interlayer bonding portions in which the phenoxy resin-containing layer and the polycarbonate resin-containing layer are bonded. However, in order to obtain excellent mechanical strength of the FRP laminated molded body, it is desirable that 10% or more, more preferably 50% or more, and further preferably 70% or more and 100% or less of all the interlayer bonding portions are interlayer bonding portions in which the phenoxy resin-containing layer and the polycarbonate resin-containing layer are bonded. In addition, it is preferable that at least a part of the phenoxy resin-containing layer and a part of the polycarbonate resin-containing layer respectively contain reinforcing fibers, but it is acceptable that only one of the resin layers contain reinforcing fibers.

The FRP laminated molded body of the embodiment can include a layer using an arbitrary resin other than the phenoxy resin and the polycarbonate resin (for example, a layer derived from a FRP molding material made of an arbitrary resin, a layer derived from a resin film made of an arbitrary resin, and the like), to the extent that the effects of the present invention are not impaired. Here, the arbitrary resin is not particularly limited, and a resin having good adhesiveness to the phenoxy resin and the polycarbonate resin is preferable. On the other hand, in order to maintain excellent mechanical strength of the FRP laminated molded body of the embodiment, it is preferable that the total ratio of the phenoxy resin-containing layer and the polycarbonate resin-containing layer to the total number of layers constituting the FRP laminated molded body is, for example, 50% or more, and more preferably 70% or more and 100% or less.

The fiber volume content (Vf) in the FRP laminated molded body of the embodiment is preferably in the range of, for example, 45 to 67%. Here, the Vf refers to the volume content of the reinforcing fibers contained in the FRP laminated molded body. It is preferable to set the Vf in the above range from the viewpoint of dynamic properties of the FRP laminated molded body. When the Vf is too high, the voids of the reinforcing fiber base material cannot be filled with the thermoplastic resin, and dynamic properties commensurate with the amount of fibers may not be obtained.

The FRP laminated molded body of the embodiment includes an interlayer bonding portion in which a phenoxy resin and a polycarbonate resin laminated in layers are firmly bonded by a crosslinking reaction at a contact interface between the two layers. This crosslinking reaction is confirmed by a significant increase in the melt viscosity of a mixture of the phenoxy resin and the polycarbonate resin, and the solidified article exhibits a higher elastic modulus than that of the single polycarbonate resin. The crosslinking reaction becomes pronounced by giving a thermal history of 260°C or higher, for example, 280°C for 10 minutes or longer, and is widely observed at a blending ratio of 9:1 to 3:7 of the phenoxy resin to the polycarbonate resin. Although the details of the reaction mechanism are not clear at this time, because the crosslinking reaction occurs without any particular limitation on the terminal structure of the polycarbonate resin, it is presumed that the crosslinking is due to a transesterification reaction between the phenoxy resin and the polycarbonate resin. That is, it is considered that the polymer chains of the phenoxy resin and the polycarbonate resin form a three-dimensional crosslink by the transesterification reaction between the carbonate group -O(C=O)-O- of the polycarbonate resin and the hydroxyl group (-OH) existing at the terminal or side chain of the phenoxy resin, and thus a crosslinked cured article that is stronger and more heat-resistant than the single phenoxy resin and the single polycarbonate resin can be obtained. Besides, the FRP laminated molded body of the embodiment is utilized for improving the mechanical strength by causing this crosslinking reaction to occur at the interface between the phenoxy resin and the polycarbonate resin.

The details of the phenoxy resin-containing layer, the polycarbonate resin-containing layer, and the reinforcing fiber constituting the FRP laminated molded body of the embodiment are described below.

[Phenoxy resin-containing layer]

The phenoxy resin-containing layer may contain reinforcing fibers (base material), and may contain other components as necessary, to the extent that the effects of the present invention are not impaired. Other components that can be contained include, for example, flame retardant agents such as brominated phenoxy resin and the like, mold release agents, dye pigments, antistatic agents, dripping inhibitors, impact strength improvers, other thermoplastic resins (polyamide resin, polycarbonate resin, fluororesin, etc.), and the like. It is most preferable that the phenoxy resin-containing layer is composed of only the phenoxy resin as the resin component and does not contain other resin components. However, when the phenoxy resin-containing layer contains other resin components, with respect to 100 parts by weight of the total resin components in the phenoxy resin-containing layer, the amount of the phenoxy resin contained in the phenoxy resin-containing layer is preferably 60 parts by weight or more, more preferably 80 parts by weight or more, and further preferably 90 parts by weight or more.

[Polycarbonate resin-containing layer]

The polycarbonate resin-containing layer may contain reinforcing fibers (base material), and may contain other components as necessary, to the extent that the effects of the present invention are not impaired. Other components that can be contained include, for example, phosphorus-based heat stabilizers such as phosphorous acid, phosphoric acid, phosphorous acid ester, and phosphoric acid ester, antioxidants such as hindered phenol-based antioxidants, mold release agents, ultraviolet absorbers, dye pigments, antistatic agents, flame retardants, dripping inhibitors, impact strength improvers, other thermoplastic resins (phenoxy resin, etc.), and the like. It is most preferable that the polycarbonate resin-containing layer is composed of only the polycarbonate resin as the resin component and does not contain other resin components. However, when the polycarbonate resin-containing layer contains other resin components, with respect to 100 parts by weight of the total resin components in the polycarbonate resin-containing layer, the amount of the polycarbonate resin contained in the polycarbonate resin-containing layer is preferably 80 parts by weight or more, and more preferably 90 parts by weight or more.

[Reinforcing fiber]

In the FRP laminated molded body of the embodiment, the reinforcing fibers can be widely selected from, for example, carbon fibers, glass fibers, ceramic fibers such as boron, alumina, and silicon carbide, metal fibers such as stainless steel, organic fibers such as aramid, and the like, and commercially available reinforcing fibers such as tyranno fibers (registered trademark) may be used. Among these fibers, carbon fibers and glass fibers are preferably used, and it is most preferable to use carbon fibers having high strength and good thermal conductivity. Both pitch-based carbon fibers and PAN-based carbon fibers can be used, but the pitch-based carbon fibers have high thermal conductivity in addition to high strength so that the generated heat can be quickly diffused, and thus the pitch-based carbon fibers are more preferable than the PAN-based carbon fibers in applications where heat needs to be dissipated. The form of the reinforcing fiber base material is not particularly limited, and a woven fabric made of continuous fibers or a UD material in which continuous fibers are drawn together in one direction is preferably used. For example, a unidirectional material, a cloth such as plain weave or twill weave, a three-dimensional cloth, or a tow made of thousands or more filaments can be used. These reinforcing fiber base materials can be used alone, or two or more types of the reinforcing fiber base materials can be used in combination.
For the purpose of improving the wettability of the matrix resin to the reinforcing fiber and the handleability, a surface treatment agent such as a sizing agent (focusing agent) or a coupling agent may be adhered to the surface of the reinforcing fiber, or an oxidation treatment and the like may be performed. The sizing agent may be, for example, a maleic anhydride-based compound, a urethane-based compound, an acrylic compound, an epoxy compound, a phenol-based compound, derivatives of these compounds, or the like. The coupling agent may be, for example, an amino silane coupling agent, an epoxy silane coupling agent, a chlor silane coupling agent, a mercapto silane coupling agent, a cation silane coupling agent, or the like.
The content of the sizing agent and the coupling agent, which are surface treatment agents, is preferably 0.1 to 10 parts by weight and more preferably 0.5 to 6 parts by weight with respect to 100 parts by weight of the reinforcing fiber. When the content of the sizing agent and the coupling agent is 0.1 to 10 parts by weight, the wettability with the matrix resin and the handleability are more excellent.

[Production method of FRP laminated molded body]

The FRP laminated molded body of the embodiment can be obtained by, for example, the following production methods (1) to (3). Hereinafter, these production methods are described in detail as typical examples, but the production method of the FRP laminated molded body of the embodiment is not limited hereto.

[Production method (1)]

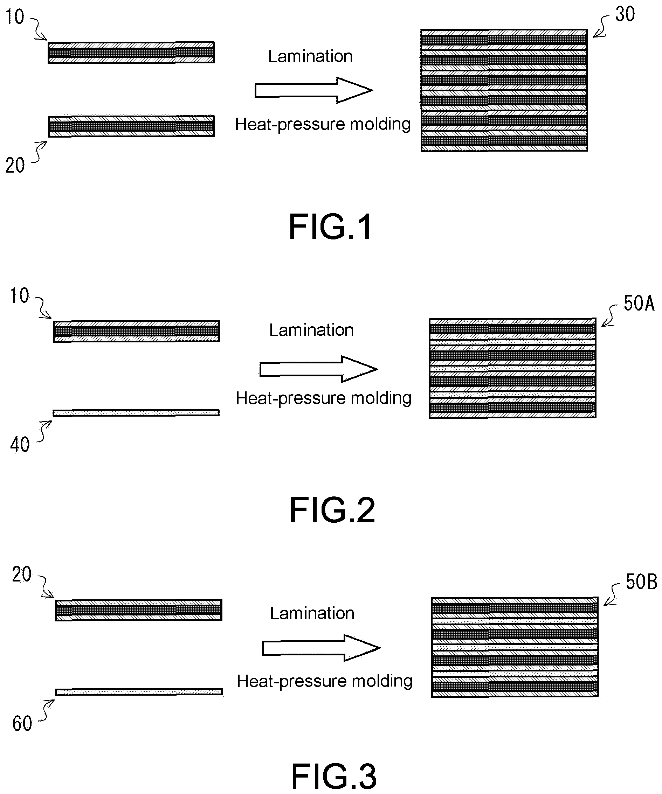

Prepreg lamination:
As shown in FIG. 1, a plurality of sheet-shaped phenoxy resin FRP molding materials 10 containing a phenoxy resin as a matrix resin and a reinforcing fiber base material, and a plurality of sheet-shaped polycarbonate resin FRP molding materials 20 containing a polycarbonate resin as a matrix resin and a reinforcing fiber base material are prepared, and the two types of FRP molding materials are laminated alternately or randomly and pressure-molded while being heated so as to obtain a FRP laminated molded body 30.

The phenoxy resin FRP molding material 10 and the polycarbonate resin FRP molding material 20 used in the production method (1) can be used without any particular problem as long as they are obtained by a known method, but it is preferable that the two materials are produced by a method not using a solvent. This method may be, for example, a method of pressure-impregnating a reinforcing fiber base material with a molten resin composition (film stack method), a method of spraying and coating a powdered resin composition on a reinforcing fiber base material (powder coating method), or a method of blending a continuous fiber obtained by spinning a resin composition with a reinforcing fiber (commingle method).

The resin ratio (RC) of the phenoxy resin FRP molding material 10 or the polycarbonate resin FRP molding material 20 is, for example, preferably in the range of 25 to 50%, and more preferably in the range of 30 to 50%, in order that a melt-mixed state of the phenoxy resin and the polycarbonate resin at the boundary between layers thereof in a subsequent heat-pressure molding step.

The phenoxy resin FRP molding material 10 and the polycarbonate resin FRP molding material 20 are alternately or randomly laminated so as to have a desired molded body thickness, and then heat-pressure molded and processed into the FRP laminated molded body 30 of the embodiment. When the phenoxy resin FRP molding material 10 and the polycarbonate resin FRP molding material 20 are randomly laminated, they may be laminated so as to include at least one lamination boundary where the phenoxy resin and the polycarbonate resin come into contact with each other. However, in order to obtain excellent mechanical strength of the FRP laminated molded body 30 to be produced, the lamination is desirably made so that preferably 10% or more, more preferably 50% or more, and further preferably 70% or more and 100% or less of all the lamination boundaries are the lamination boundaries where the phenoxy resin and the polycarbonate resin come into contact with each other.

In addition, if necessary, a FRP molding material or a resin film made of a resin other than the phenoxy resin and the polycarbonate resin may be inserted between the layers of the phenoxy resin FRP molding material 10 and the polycarbonate resin FRP molding material 20. In this case as well, the phenoxy resin FRP molding material 10 and the polycarbonate resin FRP molding material 20 may be laminated so as to at least partially include the lamination boundary where the phenoxy resin and the polycarbonate resin come into contact with each other. However, in order to obtain excellent mechanical strength of the FRP laminated molded body 30 to be produced, the lamination is desirably made so that preferably 70% or more, and more preferably 75% or more and less than 100% of all the lamination boundaries are the lamination boundaries where the phenoxy resin and the polycarbonate resin come into contact with each other.

During the molding, for example, a general pressure molding machine for FRP molding such as a flat-plate heat press machine, a belt press machine, a roll press machine, an autoclave or the like can be used, and a process condition of 5 minutes or more at a molding temperature of 260°C or higher is required. The process condition is preferably in the range of 5 to 30 minutes at a molding temperature of 260 to 300°C, and more preferably in the range of 10 to 20 minutes at a molding temperature of 280 to 290°C.

Moreover, if the molding temperature is less than 260°C or the process time is less than 5 minutes, the crosslinking reaction between the phenoxy resin and the polycarbonate resin becomes insufficient, and thus the interface between the two resin layers is fragile and sufficient mechanical strength of the FRP laminated molded body cannot be obtained.

[Production method (2)]

Film insertion:
As shown in FIG. 2 or 3, the phenoxy resin FRP molding material 10 or the polycarbonate resin FRP molding material 20, and any one of the resin films that was not used for the FRP molding material are prepared, alternately laminated, and pressure-molded while being heated, to obtain a FRP laminated molded body 50A or 50B. That is, in the production method (2), as shown in FIG. 2, a polycarbonate resin film 40 may be laminated on the phenoxy resin FRP molding material 10 to produce the FRP laminated molded body 50A, or as shown in FIG. 3, a phenoxy resin film 60 may be laminated on the polycarbonate resin FRP molding material 20 to produce the FRP laminated molded body 50B.

As the phenoxy resin FRP molding material 10 and the polycarbonate resin FRP molding material 20 used in the production method (2), the same materials as in the production method (1) can be used. In addition, the production method of the phenoxy resin film 60 or the polycarbonate resin film 40 is not particularly limited. For example, the phenoxy resin film 60 or the polycarbonate resin film 40 may be produced on our own using a T-die method or an inflation method, or a commercially available film may be used therefor. The thickness of the phenoxy resin film 60 and the polycarbonate resin film 40 is not particularly limited. However, from the viewpoints of:

a) securing a sufficient amount of resin to create a sufficient melt-mixed state at the interface with the phenoxy resin FRP molding material 10 or the polycarbonate resin FRP molding material 20, and
b) making the thickness of a part made of only resin without reinforcing fibers as small as possible to ensure the mechanical strength without reducing the Vf of the obtained FRP laminated molded bodies 50A and 50B as much as possible,
the thickness is, for example, preferably in the range of 10 to 200 μm, and more preferably in the range of 20 to 150 μm.

In the production method (2), the FRP molding material and the resin film are alternately or randomly laminated so as to have a desired molded body thickness as in the production method (1), and then heat-pressure molded and processed into the FRP laminated molded bodies 50A and 50B of the embodiment. When the FRP molding material and the resin film are randomly laminated, they may be laminated so as to include at least one lamination boundary where the phenoxy resin and the polycarbonate resin come into contact with each other. However, when the resin film that does not contain reinforcing fibers is laminated, the Vf of the FRP laminated molded bodies 50A and 50B is reduced; therefore, in order to obtain excellent mechanical strength of the FRP laminated molded bodies 50A and 50B to be produced, the lamination is desirably made so that preferably 25% or more, and more preferably 25% or more and 100% or less of all the lamination boundaries are the lamination boundaries where the phenoxy resin and the polycarbonate resin come into contact with each other.

In addition, if necessary, a FRP molding material or a resin film made of a resin other than the phenoxy resin and the polycarbonate resin may be inserted between the layers. In this case as well, the FRP molding material and the resin film may be laminated so as to at least partially include a lamination boundary where the phenoxy resin and the polycarbonate resin come into contact with each other. However, in order to obtain excellent mechanical strength of the FRP laminated molded bodies 50A and 50B to be produced, the lamination is desirably made so that preferably 25% or more, and more preferably 25% or more and less than 100% of all the lamination boundaries are the lamination boundaries where the phenoxy resin and the polycarbonate resin come into contact with each other.

During the molding, for example, a general pressure molding machine for FRP molding such as a flat-plate heat press machine, a belt press machine, a roll press machine, an autoclave or the like can be used, and a process condition of 5 minutes or more at a molding temperature of 260°C or higher is required. The process condition is preferably in the range of 5 to 30 minutes at a molding temperature of 260 to 300°C, and more preferably in the range of 10 to 20 minutes at a molding temperature of 280 to 290°C.

Moreover, if the molding temperature is less than 260°C or the process time is less than 5 minutes, the crosslinking reaction between the phenoxy resin and the polycarbonate resin becomes insufficient, and thus the interface between the two resin layers is fragile and sufficient mechanical strength of the FRP laminated molded bodies 50A and 50B cannot be obtained.

[Production method (3)]

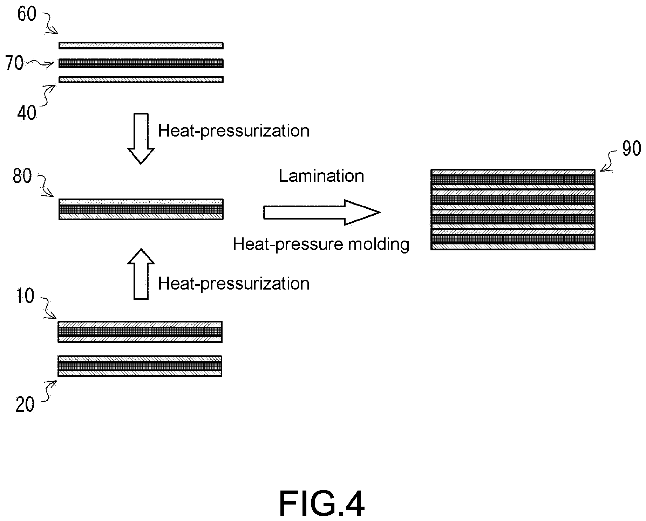

Use of hybrid molding material:
As shown in FIG. 4, a hybrid FRP molding material 80 in which one surface of the reinforcing fiber base material 70 is coated with a phenoxy resin and the other surface thereof is coated with a polycarbonate resin is prepared, and a plurality of the hybrid FRP molding materials 80 are laminated and heat-pressure molded to obtain a FRP laminated molded body 90.

Different from the production methods (1) and (2), in the hybrid FRP molding material 80 used in the production method (3), one surface of the reinforcing fiber base material 70 is coated with a phenoxy resin and the other surface thereof is coated with a polycarbonate resin. Here, a coating layer of the phenoxy resin on one side surface of the hybrid FRP molding material 80 is a part serving as the "phenoxy resin-containing layer" in the FRP laminated molded body 90, and a coating layer of the polycarbonate resin on the other side surface is a part serving as the "polycarbonate resin-containing layer" in the FRP laminated molded body 90. The phenoxy resin and the polycarbonate resin coating the reinforcing fiber base material 70 may coat the surfaces of the reinforcing fiber base material 70 in a film shape, or may coat the surfaces of the reinforcing fiber base material 70 in a state that the resin powder is deposited and adhered. However, it is preferable that the surfaces are coated in a film shape from the viewpoints of productivity of the hybrid FRP molding material 80 and the like.

The hybrid FRP molding material 80 is obtained by applying pressure to the reinforcing fiber base material 70 in a state that the phenoxy resin and the polycarbonate resin are respectively heated to a temperature higher than the melting or softening temperature, and coating the surfaces of the reinforcing fiber base material 70. In particular, the following methods can be exemplified:

(i) a method in which as shown by a downward arrow in FIG. 4, the phenoxy resin film 60 and the polycarbonate resin film 40 are overlapped from both sides of the reinforcing fiber base material 70 in the thickness direction, and the resin compositions are melt-impregnated into the reinforcing fiber base material 70 while being heat-pressurized;
(ii) a method in which as shown by an upward arrow in FIG. 4, the phenoxy resin FRP molding material 10 and the polycarbonate resin FRP molding material 20 are overlapped, and the resin compositions are melt-impregnated while being heat-pressurized and integrated simultaneously; and

other methods.

As the equipment for realizing the above methods, for example, a pressure molding machine, a belt or roll press machine can be suitably used.

Moreover, in the above methods (i) and (ii), the temperature at which the phenoxy resin and the polycarbonate resin are melt-impregnated into the reinforcing fiber base material 70 is less than 260°C, and preferably within a temperature range of 200°C to 240°C. If the process is performed at a temperature of 260°C or higher, it is not preferable because the phenoxy resin and the polycarbonate resin undergo a crosslinking reaction, and thus the formability of the hybrid FRP molding material 80 is reduced.

The resin ratio (RC) of the hybrid FRP molding material 80 is, for example, preferably in the range of 25 to 50%, and more preferably in the range of 30 to 50%, in order that a melt-mixed state of the phenoxy resin and the polycarbonate resin can be reliably formed in a subsequent heat-pressure molding step.

The hybrid FRP molding material 80 is laminated so as to have a desired molded body thickness in the same manner as in the production methods (1) and (2). At this time, the orientation of front and back surfaces of the hybrid FRP molding material 80 is not particularly limited, and the hybrid FRP molding material 80 may be laminated so as to at least partially include a lamination boundary where the phenoxy resin and the polycarbonate resin come into contact with each other. However, in order to obtain excellent mechanical strength of the FRP laminated molded body 90 to be produced, the lamination is desirably made so that preferably 50% or more, and more preferably 75% or more and 100% or less of all the lamination boundaries are the lamination boundaries where the phenoxy resin and the polycarbonate resin come into contact with each other.

In addition, if necessary, a FRP molding material or a resin film made of the phenoxy resin or the polycarbonate resin, or a FRP molding material or a resin film made of a resin other than the phenoxy resin and the polycarbonate resin may be inserted between the layers of a plurality of hybrid FRP molding materials 80. In this case as well, the hybrid FRP molding material 80 may be laminated so as to at least partially include a lamination boundary where the phenoxy resin and the polycarbonate resin come into contact with each other. However, in order to obtain excellent mechanical strength of the FRP laminated molded body 90 to be produced, the lamination is desirably made so that preferably 50% or more, and more preferably 75% or more and 100% or less of all the lamination boundaries are the lamination boundaries where the phenoxy resin and the polycarbonate resin come into contact with each other.

The laminated body formed by laminating the plurality of hybrid FRP molding materials 80 is heat-pressure molded and processed into the FRP laminated molded body 90 of the embodiment. During the molding, for example, a general pressure molding machine for FRP molding such as a flat-plate heat press machine, a belt press machine, a roll press machine, an autoclave or the like can be used, and a process condition of 5 minutes or more at a molding temperature of 260°C or higher is required. The process condition is preferably in the range of 5 to 30 minutes at a molding temperature of 260 to 300°C, and more preferably in the range of 10 to 20 minutes at a molding temperature of 280 to 290°C. Moreover, if the molding temperature is less than 260°C or the process time is less than 5 minutes, the crosslinking reaction between the phenoxy resin and the polycarbonate resin becomes insufficient, and thus the interface between the two resin layers is fragile and sufficient mechanical strength of the FRP laminated molded body 90 cannot be obtained. In addition, by the heat-pressure molding, the permeated coated phenoxy resin and coated polycarbonate resin may be mixed and crosslinked near a center of the hybrid FRP molding material 80 in the thickness direction (inside the reinforcing fiber base material 70), but the inside of the reinforcing fiber base material 70 is not included in the "interlayer bonding portion".

The FRP laminated molded bodies 30, 50A, 50B, and 90 obtained in this way can then be coated, or subjected to hole drilling for fastening the FRP laminated molded body to other parts, or post-processes such as inserting the FRP laminated molded body into an injection molding die to form a rib.

Regarding the FRP laminated molded bodies 30, 50A, 50B, and 90 obtained as described above, the layer containing the phenoxy resin and the layer containing the polycarbonate resin are laminated in layers, and thereby the phenoxy resin and the polycarbonate resin are in a mixed state at the bonding portion, thus obtaining stable and strong interlayer bonding and having high mechanical properties. Accordingly, the FRP laminated molded bodies 30, 50A, 50B, and 90 have both excellent impact resistance which is a characteristic of the polycarbonate resin and good adhesiveness to other members which is a characteristic of the phenoxy resin, and also have excellent processability of bending and the like. Therefore, the FRP laminated molded bodies 30, 50A, 50B, and 90 can be suitably applied as mounting members in applications such as automobile members, electrical and electronic device housings, aircraft members and the like.

The application of the FRP laminated molded body of the embodiment is not particularly limited. For example, the FRP laminated molded body of the embodiment can be applied to sporting goods, personal digital assistants, parts for electrical and electronic devices, parts for civil engineering and construction materials, structural parts for automobiles and motorcycles, and aircraft parts. From the viewpoint of the dynamic properties thereof, the FRP laminated molded body of the embodiment can be more preferably used in electrical and electronic device housings, structural materials for bicycles and sporting goods, and interior/exterior members of automobiles, aircraft and the like, for which high mechanical strength is required.

**Example**

Hereinafter, examples are shown and the present invention is described in more detail, but the present invention is not limited to the description of these examples. Moreover, test and measurement methods for various physical properties in the examples are as follows.

[Average particle size (D50)]

As an average particle size, a particle size when a cumulative volume was 50% on a volume basis was measured by a laser diffraction and scattering particle size distribution measuring device (Microtrack MT3300EX, manufactured by Nikkiso Co., Ltd.).

[Dynamic mechanical analysis (DMA)]

The measurement was performed using a dynamic viscoelasticity measuring device (DMA 7e manufactured by Perkin Elmer).
Regarding the displacement amount of a probe of a cured article, the displacement amount of the probe after DMA measurement was compared with the position before measurement at a temperature in the range of 25°C to 300°C.
Regarding the Tg of the cured article, a test piece having a width of 10 mm and a length of 10 mm was cut out from the cured article with a diamond cutter, and measured under a temperature rise condition of 5°C/min and in the range of 25°C to 300°C, and a maximum peak value of the obtained $\tan\delta$ was set as the Tg.

[Melt viscosity]

About 300 mg of a measurement sample was sandwiched between parallel plates and the temperature thereof is raised to 280°C at 50°C/min. Then, a rheometer (MCR302 manufactured by Anton Paar) was used to measure a minimum melt viscosity under conditions of frequency: 1 Hz, swing angle: 0.5%, and normal force: 0.1 N while the temperature is maintained at 280°C, and used to measure a melt viscosity at 280°C or higher under the same conditions.

[Resin ratio (RC: %)]

The resin ratio RC was calculated from a weight of the reinforcing fiber base material before adhesion of the matrix resin (W1) and a weight of the CFRP molding material after adhesion of the resin (W2) by using the following formula.

$$\text{Resin ratio (RC: \%)} = (W2 - W1)/W2 \times 100$$

W1: weight of reinforcing fiber base material before resin adhesion
W2: weight of CFRP molding material after resin adhesion

[Fiber volume content (Vf: %)]

The fiber volume content Vf was measured by a combustion method based on JIS K 7075: 1991 Testing methods for carbon fiber content and void content of carbon fiber-reinforced plastics.

[Measurement of mechanical strength]

The mechanical properties (breaking point stress and elastic modulus) of the obtained CFRP molded body were measured based on JIS K 7074: 1988 Testing methods for flexural properties of carbon fiber-reinforced plastics.
Specifically, a laminated molded product cut into a strip shape having a total length of 80 mm and a width of 15 mm was used as the test piece, and a distance between fulcrums was set to 40 mm. The measurement was performed using a tensilon universal material tester (RTA250 manufactured by A & D) at a test speed of 2 mm/min.

[Measurement of interlaminar shear strength]

Based on JIS K 7078: 1991 Testing methods for apparent interlaminar shear strength of carbon fiber-reinforced plastics, a test piece having a length of 21 mm, a width of 10 mm, and a thickness of 3 mm was measured using a universal strength tester (Autograph AG-Xplus100kN manufactured by Shimadzu Corporation).

[Evaluation of mechanical strength of FRP laminated molded body]

The mechanical properties (bending strength, bending elastic modulus) of the obtained FRP laminated molded body were measured based on JIS K7074: 1988 Testing methods for flexural properties of carbon fiber-reinforced plastics.

[Measurement of temperature of deflection under load]

Based on a C-method in JIS K 7191-2: 2015 Plastics - Determination of temperature of deflection under load, the temperature of deflection under load of a test piece having a length of 80 mm, a width of 10 mm, and a thickness of 1 mm was measured using a HDT tester 3M-2V manufactured by Toyo Seiki Seisakusho.

<Phenoxy resin>

- A-1:
  Phenotohto YP-50S (bisphenol A type manufactured by NIPPON STEEL Chemical & Material Co., Ltd., Mw = 60,000, hydroxyl group equivalent = 284 g/eq), melt viscosity at 200°C = 400 Pa·s, Tg = 84°C

<Bifunctional epoxy resin>

- A-2:
  Epotohto YP-017 (bisphenol A type manufactured by NIPPON STEEL Chemical & Material Co., Ltd., Mw = 4000), softening point = 117°C

<Polycarbonate resin>

- B-1:
  lupilon S3000 (manufactured by Mitsubishi Engineering Plastics Co., Ltd., Mw = 45000), melt viscosity at 280°C = 1,020 Pa·s, Tg = 149°C, Tm = 240°C
- B-2:
  Novarex 7022R (manufactured by Mitsubishi Engineering Plastics Co., Ltd., Mw = 21,000), melt viscosity at 280°C = 1,200 Pa·s, Tg = 160°C, Tm = 230 to 260°C

[Example 1]

90 parts by weight of phenoxy resin A-1 and 10 parts by weight of polycarbonate resin B-1 were prepared, respectively pulverized and classified into a powder having an average particle size D50 of 80 $\mu$m, and then dry-blended by a dry powder mixer (manufactured by Aichi Electric Co., Ltd., Rocking Mixer) to prepare resin composition E1.

In addition, the obtained resin composition E1 was cured by kneading at 280°C for 15 minutes using a laboratory blast mill (manufactured by Toyo Seiki Co., Ltd.) to obtain cured article E1.

[Examples 2 to 7]

Resin compositions E2 to E7 and cured articles E2 to E7 were obtained in the same manner as in Example 1, except that the blending ratios of phenoxy resin A-1 and polycarbonate resin B-1 were changed as shown in Table 1.

[Example 8]

Resin composition E8 and cured article E8 were obtained in the same manner as in Example 1, except that polycarbonate resin B-2 was used instead of polycarbonate resin B-1 and the blending ratios were the same as in Example 2.

[Example 9]

Resin composition E9 and a cured article E9 were obtained in the same manner as in Example 1, except that bifunctional epoxy resin A-2 was used instead of phenoxy resin A-1 and polycarbonate resin B-2 was used instead of polycarbonate resin B-1, and the blending ratios were the same as in Example 3.

[Examples 10 and 11]

Resin compositions E10 and E11 were prepared in the same manner as in Example 1, except that the blending ratios of phenoxy resin A-1 and polycarbonate resin B-1 were changed as shown in Table 1.
In addition, the obtained resin compositions E10 and E11 were cured by kneading at 280°C for 15 minutes using a laboratory blast mill (manufactured by Toyo Seiki Co., Ltd.) to obtain cured articles E10 and E11.
Resin compositions E1 to E11 and cured articles E1 to E11 obtained in Examples 1 to 11 were subjected to DMA measurement and melt viscosity measurement. The results were shown in Table 1. In any one of the examples, it was confirmed that the melt viscosity increased due to the crosslinking reaction between the phenoxy resin and the polycarbonate resin, and in particular, none of cured articles E1 to E9 has a melting point and remained in a solid state even when heated.

[Comparative Example 1]

Solidified article R1 of phenoxy resin A-1 was subjected to DMA measurement and melt viscosity measurement. The results were shown in Table 1.

[Comparative Example 2]

Solidified article R2 of polycarbonate resin B-1 was subjected to DMA measurement and melt viscosity measurement. The results were shown in Table 1.

[Comparative Example 3]

Resin composition R3 was prepared in the same manner as in Example 1, except that a polyamide resin (Polyamide 6 manufactured by Toray, CM1013) was used instead of polycarbonate resin B-1 and the blending ratios were as shown in Table 1.
The obtained resin composition R3 was kneaded at 280°C for 15 minutes in the same manner as in Example 1, but no significant thickening was observed. Therefore, resin composition R3 after kneading was cooled directly to obtain solidified article R3. The results were shown in Table 1.

[Reference Examples 1 and 2]

Resin composition E2 obtained in Example 2 was cured by respectively kneading at 260°C (Reference Example 1) and 240°C (Reference Example 2) for 15 minutes to obtain cured articles R4 and R5. The results were shown in Table 1.

[Table 1]

| | Resin composition | Cured article/ solidified article | First resin | | Second resin | | Heat treatment temperature | DMA tanδ maximum value | DMA probe displacement | Melt viscosity [Pa·s] | |
|---|---|---|---|---|---|---|---|---|---|---|---|
| | | | Type | Blending ratio | Type | Blending ratio | | | | Min (to 280°C) | 280°C 20 min |
| Example 1 | E1 | E1 | A-1 | 90 | B-1 | 10 | 280 | 117°C | 1 mm > | 350 | 8390 |
| Example 2 | E2 | E2 | A-1 | 80 | B-1 | 20 | 280 | 115°C | 1 mm > | 650 | 130000 |
| Example 3 | E3 | E3 | A-1 | 70 | B-1 | 30 | 280 | 120°C | 1 mm > | 790 | 250000 |
| Example 4 | E4 | E4 | A-1 | 60 | B-1 | 40 | 280 | 126°C | 1 mm > | 770 | 154000 |
| Example 5 | E5 | E5 | A-1 | 50 | B-1 | 50 | 280 | 130°C | 1 mm > | 790 | 155000 |
| Example 6 | E6 | E6 | A-1 | 40 | B-1 | 60 | 280 | 132°C | 1 mm > | 887 | 78400 |
| Example 7 | E7 | E7 | A-1 | 30 | B-1 | 70 | 280 | 138°C | 1 mm > | 930 | 22000 |
| Example 8 | E8 | E8 | A-1 | 80 | B-2 | 20 | 280 | 116°C | 1 mm > | 659 | 213000 |
| Example 9 | E9 | E9 | A-2 | 70 | B-2 | 30 | 280 | 125°C | 1 mm > | 917 | 24700 |
| Example 10 | E10 | E10 | A-1 | 20 | B-1 | 80 | 280 | 144°C | ≥ 1 mm | 756 | 2370 |
| Example 11 | E11 | E11 | A-1 | 10 | B-1 | 90 | 280 | 150°C | ≥ 1 mm | 50 | 149 |
| Comparative Example 1 | R1 | R1 | A-1 | 100 | - | - | 280 | 115°C | ≥ 1 mm | 520 | 520 |
| Comparative Example 2 | R2 | R2 | - | - | B-1 | 100 | 280 | 165°C | ≥ 1 mm | 100 | 1030 |
| Comparative Example 3 | R3 | R3 | A-1 | 50 | PA | 50 | 280 | 117°C | ≥ 1 mm | 150 | 526 |
| Reference Example 1 | E2 | R4 | A-1 | 80 | B-1 | 20 | 260 | 118°C | 1 mm > | - | - |
| Reference Example 2 | E2 | R5 | A-1 | 80 | B-1 | 20 | 240 | 117°C | ≥ 1 mm | - | - |

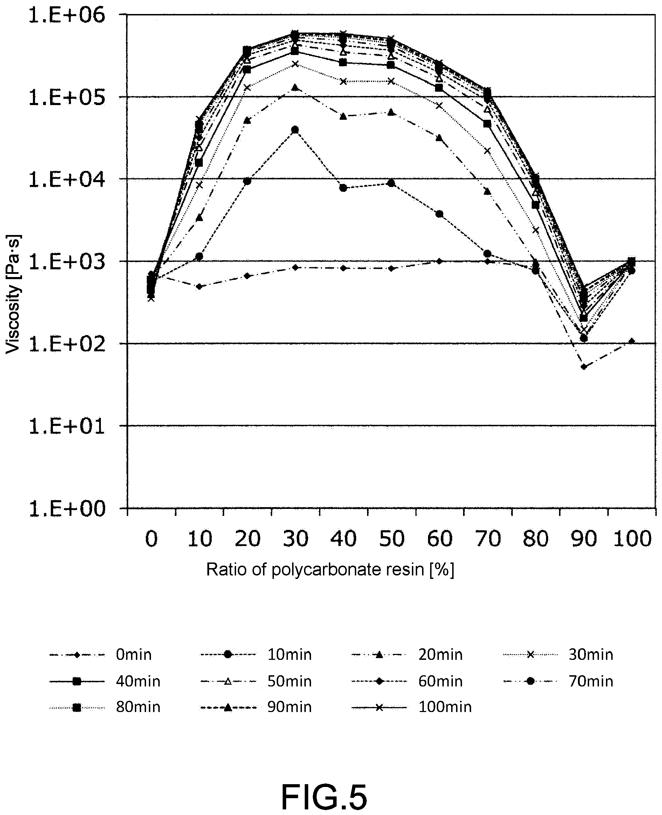

In addition, resin compositions E1 to E11 obtained in Examples 1 to 11 and the resin compositions R1 and R2 obtained in Comparative Examples 1 and 2 were subjected to viscosity measurement by using a rheometer, and the measurement results of viscosity after 0 minute, 10 minutes, 20 minutes, 30 minutes, 40 minutes, 50 minutes, 60 minutes, 70 minutes, 80 minutes, 90 minutes, and 100 minutes since the temperature reached 280°C were shown in FIG. 5.

[Example 12]

With SA3202 (manufactured by Sakai Ovex Co., Ltd., a plain-woven open carbon fiber cloth material) from which the sizing agent has been removed as the reinforcing fiber base material, resin composition E1 obtained in Example 1 was powder-coated under the conditions of a charge of 60 kV and a blowing air volume of 60 L/min in an electrostatic field so that the Vf after molding was 60%. Then, the resin composition was heat-fused to carbon fibers by heating and melting at 250°C for 3 minutes in an oven to produce CFRP prepreg A having a thickness of 0.9 mm and a resin ratio (RC) of 30%.

Thirteen pieces of the obtained CFRP prepreg A were pressed at 5 MPa for 10 minutes with a press machine heated to 280°C to prepare CFRP molded body X1. After cooling the obtained CFRP molded body X1, the mechanical properties (breaking point stress and elastic modulus) were measured. The results were shown in Table 2.

[Examples 13 to 22, Comparative Examples 4 to 6]

CFRP prepregs B to K of examples and CFRP prepregs L to N of comparative examples were produced in the same manner as in Example 12, except that the resin compositions (or resins) obtained in Examples 2 to 11 and Comparative Examples 1 to 3 were used. Furthermore, CFRP molded bodies X2 to X11 of examples and CFRP molded bodies W1 to W3 of comparative examples were produced, and the mechanical properties (breaking point stress and elastic modulus) were measured. The results were shown in Table 2. Moreover, the corresponding relationships with the resin compositions used were also shown in Table 2.

[Reference Examples 3 and 4]

CFRP prepreg B was produced in the same manner as in Example 12 except that resin composition E2 obtained in Example 2 was used. Furthermore, CFRP molded bodies W4 and W5 were produced in the same manner as in Example 12 except that the press temperature was changed to 260°C (Reference Example 3) or 240°C (Reference Example 4), and the mechanical properties (breaking point stress and elastic modulus) were measured. The results were shown in Table 2. Moreover, the corresponding relationships with the resin compositions used were also shown in Table 2.

[Table 2]

| | Resin composition | Prepreg | CFRP molded body | | Mechanical properties of CFRP | |
| | | | Type | Vf [%] | Sizing agent removal of base material | |
| | | | | | Breaking point stress | Elastic modulus |
|---|---|---|---|---|---|---|
| Example 12 | E1 | A | X1 | 60 | 970 MPa | 72 GPa |
| Example 13 | E2 | B | X2 | 62 | 1106 MPa | 70 GPa |
| Example 14 | E3 | c | X3 | 59 | 990 MPa | 66 GPa |
| Example 15 | E4 | D | X4 | 60 | 969 MPa | 67 GPa |
| Example 16 | E5 | E | X5 | 60 | 983 MPa | 69 GPa |
| Example 17 | E6 | F | X6 | 60 | 956 MPa | 65 GPa |
| Example 18 | E7 | G | X7 | 61 | 964 MPa | 68 GPa |
| Example 19 | E8 | H | X8 | 60 | 934 MPa | 73 GPa |
| Example 20 | E9 | I | X9 | 60 | 700 MPa | 78 GPa |
| Example 21 | E10 | J | X10 | 63 | 950 MPa | 68 GPa |
| Example 22 | E11 | K | X11 | 61 | 943 MPa | 67 GPa |

(continued)

| | Resin composition | Prepreg | CFRP molded body | | Mechanical properties of CFRP | |
| | | | Type | Vf [%] | Sizing agent removal of base material | |
| | | | | | Breaking point stress | Elastic modulus |
|---|---|---|---|---|---|---|
| Comparative Example 4 | R1 | L | W1 | 60 | 987 MPa | 73 GPa |
| Comparative Example 5 | R2 | M | W2 | 61 | 926 MPa | 68 GPa |
| Comparative Example 6 | R3 | N | W3 | 63 | 1001 MPa | 74 GPa |
| Reference Example 3 | E2 | B | W4 | 59 | 1081 MPa | 70 GPa |
| Reference Example 4 | E2 | B | W5 | 61 | 1042 MPa | 70 GPa |

[Examples 23 to 33, Comparative Examples 7 and 8]

CFRP prepregs a to k of examples and CFRP prepregs 1 and m of comparative examples were obtained in the same manner as in Examples 12 to 22 and Comparative Examples 4 and 5, except that SA3202 from which the sizing agent has not been removed was used as the reinforcing fiber base material.

The obtained CFRP prepregs a to k and CFRP prepregs 1 and m were pressed at 5 MPa for 10 minutes with a press machine heated to 280°C to prepare CFRP molded bodies Y1 to Y11 of examples and CFRP molded bodies Z1 and Z2 of comparative examples, and the mechanical properties (breaking point stress and elastic modulus) were measured. The results were shown in Table 3. Moreover, the corresponding relationships with the resin compositions used were also shown in Table 3.

[Table 3]

| | Resin composition | Prepreg | CFRP molded body | | Mechanical properties of CFRP | |
| | | | Type | Vf [%] | With sizing agent treatment of base material | |
| | | | | | Breaking point stress | Elastic modulus |
|---|---|---|---|---|---|---|
| Example 23 | E1 | a | Y1 | 61 | 962 MPa | 68 GPa |
| Example 24 | E2 | b | Y2 | 59 | 849 MPa | 68 GPa |
| Example 25 | E3 | c | Y3 | 58 | 570 MPa | 69 GPa |
| Example 26 | E4 | d | Y4 | 58 | 520 MPa | 69 GPa |
| Example 27 | E5 | e | Y5 | 57 | 494 MPa | 70 GPa |
| Example 28 | E6 | f | Y6 | 60 | 493 MPa | 68 GPa |
| Example 29 | E7 | g | Y7 | 59 | 445 MPa | 68 GPa |
| Example 30 | E8 | h | Y8 | 60 | 869 MPa | 69 GPa |
| Example 31 | E9 | i | Y9 | 60 | 947 MPa | 70 GPa |
| Example 32 | E10 | j | Y10 | 60 | 354 MPa | 73 GPa |
| Example 33 | E11 | k | Y11 | 60 | 335 MPa | 68 GPa |
| Comparative Example 7 | R1 | 1 | Z1 | 60 | 931 MPa | 75 GPa |
| Comparative Example 8 | R2 | m | Z2 | 60 | 316 MPa | 79 GPa |

In addition, the interlaminar shear strength and the temperature of deflection under load were measured for CFRP molded body X2 obtained in Example 13 and CFRP molded body X10 obtained in Example 21. The results were shown in Table 4.

[Table 4]

|  | Example 13 | Example 21 |
|---|---|---|
| CFRP molded body | X2 | X10 |
| Interlaminar shear strength [MPa] | 59.3 | 39.2 |
| Temperature of deflection under load [°C] | > 300 | > 300 |

[Example 34]

The phenoxy resin and the polycarbonate resin were pulverized and classified to produce two types of matrix resin powder having an average particle size D50 of 80 $\mu$m. Next, a plain-woven reinforced fiber base material made of opened carbon fibers (manufactured by Toray Industries, Inc., T700) was prepared, and each matrix resin powder was separately coated under the conditions of a charge of 100 kV and a blowing air pressure of 0.1 MPa in an electrostatic field. After that, the phenoxy resin was heat-melted at 200°C for 3 minutes and the polycarbonate resin was heat-melted at 260°C for 3 minutes to heat-fuse the resin, thereby obtaining a phenoxy resin FRP molding material and a polycarbonate resin FRP molding material. The resin ratio (RC) of the obtained FRP molding material was 33% for the phenoxy resin FRP molding material and 32% for the polycarbonate resin FRP molding material.

The phenoxy resin FRP molding material and the polycarbonate resin FRP molding material described above were alternately laminated in a manner that the outermost layer was the phenoxy resin FRP molding material, heat-pressure molding is performed under the conditions of 5 MPa, 280°C, and 10 min with a heat press machine, and various physical properties of the obtained FRP laminated molded body were measured. The results were shown in Table 5.

[Example 35]

A FRP laminated molded body was produced in the same manner as in Example 34 except that the heat-pressure molding temperature was set to 260°C, and various physical properties were measured. The results were shown in Table 5.

[Example 36]

A phenoxy resin film having a thickness of 20 $\mu$m was obtained by using a T-die extruder for phenoxy resin A-1 under the conditions of a die width of 150 mm, a coat hanger die, and a lip width of 0.2 mm.

The polycarbonate resin FRP molding material prepared in Example 34 and the phenoxy resin film were laminated in a manner that the outermost layer was the polycarbonate resin FRP molding material.

Moreover, a total of 51 sheets of polycarbonate resin FRP molding material and phenoxy resin film were laminated, wherein one sheet of phenoxy resin film was laminated for every three sheets of polycarbonate resin FRP molding material.

Then, the laminated body was heat-pressure molded under the conditions of 5 MPa, 280°C, and 10 min with a heat press machine, and various physical properties of the obtained FRP laminated body were measured. The results were shown in Table 5.

[Example 37]

A FRP laminated molded body was produced in the same manner as in Example 36 except that a total of 46 sheets of polycarbonate resin FRP molding material and phenoxy resin film were laminated, wherein four sheets of polycarbonate resin FRP molding material come to the outermost layer and one sheet of phenoxy resin film was laminated for every six sheets of polycarbonate resin FRP molding material in the other layers, and various physical properties were measured. The results were shown in Table 5.

[Comparative Example 9]

A FRP laminated molded body was produced in the same manner as in Example 34 except that the heat-pressure molding temperature was set to 240°C, and various physical properties were measured. The results were shown in Table 5.

[Comparative Example 10]

A FRP laminated molded body was produced in the same manner as in Example 36 except that the heat-pressure molding temperature was set to 240°C, and various physical properties were measured. The results were shown in Table 5.

[Comparative Example 11]

A FRP laminated molded body was produced in the same manner as in Example 37 except that the heat-pressure molding temperature was set to 240°C, and various physical properties were measured. The results were shown in Table 5.

[Reference Example 5]

A FRP laminated molded body was produced in the same manner as in Example 34 except that only the phenoxy resin FRP molding material was used, and various physical properties were measured. The results were shown in Table 5.

[Reference Example 6]

A FRP laminated molded body was produced in the same manner as in Example 34 except that only the polycarbonate resin FRP molding material was used, and various physical properties were measured. The results were shown in Table 5.

[Table 5]

| | Example 34 | Example 35 | Example 36 | Example 37 | Comparative Example 9 | Comparative Example 10 | Comparative Example 11 | Reference Example 5 | Reference Example 6 |
|---|---|---|---|---|---|---|---|---|---|
| Molding material 1 | Phenoxy resin | Phenoxy resin | - | - | Phenoxy resin | | | Phenoxy resin | |
| Molding material 2 | PC resin | PC resin | PC resin | PC resin | PC resin | PC resin | PC resin | - | PC resin |
| Resin film | - | - | Phenoxy resin | Phenoxy resin | - | Phenoxy resin | Phenoxy resin | - | - |
| Lamination | Alternately laminated one by one | Alternately laminated one by one | Insert one sheet of resin film for every three sheets of molding material 2 | Insert one sheet of resin film for every six sheets of molding material 2 | Alternately laminated one by one | Insert one sheet of resin film for every three sheets of molding material 2 | Insert one sheet of resin film for every six sheets of molding material 2 | - | - |
| Heat-pressure molding temperature | 280°C | 260°C | 280°C | 280°C | 240°C | 240°C | 240°C | 280°C | 280°C |
| Interlaminar shear strength [MPa] | 57.4 | 53.6 | 49.7 | 40.4 | 19.2 | 30.2 | 25.4 | 50.6 | 50.2 |
| Bending strength [MPa] | 1000 | 963 | 899 | 896 | 937 | 896 | 899 | 987 | 926 |
| Bending elastic modulus [MPa] | 74 | 65 | 65 | 63 | 64 | 65 | 63 | 73 | 68 |
| Vf [%] | 60 | 60 | 59 | 57 | 59 | 58 | 55 | 60 | 61 |
| Temperature of deflection under load | > 300°C | - | - | - | - | - | - | 115°C | 145°C |

Because a strong adhesive interface can be formed by the crosslinking reaction between the phenoxy resin and the polycarbonate resin, the FRP laminated molded body of the present invention has an interlaminar shear strength greater than that of the FRP laminated molded body with insufficient crosslinking as in Comparative Example 9, and can exhibit high mechanical properties that can be used for structural materials.

Although the embodiments of the present invention have been described above in detail for the purpose of exemplification, the present invention is not limited to the above embodiments.

This application claims the priority benefit based on Japanese Patent No. 2019-057952 filed in Japan on March 26, 2019 and Japanese Patent No. 2019-066082 filed in Japan on March 29, 2019, the entire contents of which are hereby expressly incorporated by reference into the present specification.

[Reference Signs List]

| 10 | phenoxy resin FRP molding material |
|---|---|
| 20 | polycarbonate resin FRP molding material |
| 30 | FRP laminated molded body (prepreg lamination) |
| 40 | polycarbonate resin film |
| 50A, 50B | FRP laminated molded body (film insertion lamination) |
| 60 | phenoxy resin film |
| 70 | reinforcing fiber base material |
| 80 | hybrid FRP molding material |
| 90 | FRP laminated molded body (hybrid prepreg lamination) |

**Claims**

1. A resin composition, which contains a first resin and a second resin different from the first resin and exhibits curability by thermal crosslinking, wherein

   the first resin is one or more resins selected from a group consisting of a bifunctional epoxy resin having a weight average molecular weight of 4,000 or more and a phenoxy resin, and
   the second resin is a polycarbonate resin.

2. The resin composition according to claim 1, wherein the content ratio of the first resin to the second resin (first resin:second resin) is in the range of 9:1 to 3:7 in terms of weight ratio.

3. The resin composition according to claim 1, wherein both the first resin and the second resin have a bisphenol skeleton in a molecule.

4. The resin composition according to claim 1, wherein a glass transition point temperature (Tg) measured by dynamic mechanical analysis (DMA) of a cured article obtained by thermally crosslinking the resin composition is 100°C or higher, and the cured article does not have a melting point (Tm).

5. The resin composition according to claim 1, wherein a displacement amount of a probe after measurement at a temperature of 25°C to 300°C in dynamic mechanical analysis (DMA) of a cured article obtained by thermally crosslinking the resin composition is less than -1 mm with respect to a position before measurement.

6. A cured molded article, containing a cured article of the resin composition according to claim 1.

7. A fiber-reinforced plastic molding material, containing a reinforcing fiber base material and a powder of the resin composition according to claim 1 that adheres to the reinforcing fiber base material.

8. A fiber-reinforced plastic, containing a reinforcing fiber base material and a cured article of the resin composition according to claim 1 that adheres to the reinforcing fiber base material.

9. A fiber-reinforced plastic laminated molded body, which contains a phenoxy resin, a polycarbonate resin, and a reinforcing fiber and consists of a plurality of layers, comprising

one or more interlayer bonding portions in which a layer containing the phenoxy resin and a layer containing the polycarbonate resin are bonded by a crosslinking reaction at a lamination interface between the two layers.

10. The fiber-reinforced plastic laminated molded body according to claim 9, wherein the layer containing the phenoxy resin and the layer containing the polycarbonate resin are alternately laminated.

11. The fiber-reinforced plastic laminated molded body according to claim 9, wherein the interlayer bonding portion in which resin layers are bonded by a crosslinking reaction has an interlaminar shear strength of 40 MPa or more measured by an ILSS method.

12. The fiber-reinforced plastic laminated molded body according to claim 9, wherein the reinforcing fiber is a continuous fiber selected from at least one or more of a carbon fiber, a glass fiber, a ceramic fiber, a metal fiber, and an organic fiber.

13. A method for producing a fiber-reinforced plastic laminated molded body, which produces the fiber-reinforced plastic laminated molded body according to claim 9, comprising
laminating a fiber-reinforced plastic molding material having a phenoxy resin as a matrix resin and a fiber-reinforced plastic molding material having a polycarbonate resin as a matrix resin, and performing a molding process at a temperature of 260°C or higher.

14. A method for producing a fiber-reinforced plastic laminated molded body, which produces the fiber-reinforced plastic laminated molded body according to claim 9, comprising:

a step of preparing a plurality of fiber-reinforced plastic molding materials in which one surface of a reinforcing fiber base material is coated with a phenoxy resin and the other surface thereof is coated with a polycarbonate resin; and
a step of laminating the plurality of fiber-reinforced plastic molding materials so as to comprise a lamination boundary where the phenoxy resin and the polycarbonate resin come into contact with each other, and performing a molding process at a temperature of 260°C or higher.

15. The method for producing a fiber-reinforced plastic laminated molded body according to claim 14, wherein a fiber-reinforced plastic molding material having a phenoxy resin as a matrix resin and/or a fiber-reinforced plastic molding material having a polycarbonate resin as a matrix resin are/is interposed and laminated among the plurality of fiber-reinforced plastic molding materials.

16. The method for producing a fiber-reinforced plastic laminated molded body according to claim 14, wherein a phenoxy resin film and/or a polycarbonate resin film are/is interposed and laminated among the plurality of fiber-reinforced plastic molding materials.

17. A method for producing a fiber-reinforced plastic laminated molded body, which produces the fiber-reinforced plastic laminated molded body according to claim 9, comprising
laminating a fiber-reinforced plastic molding material having a phenoxy resin as a matrix resin and a polycarbonate resin film, and performing a molding process at a temperature of 260°C or higher.

18. A method for producing a fiber-reinforced plastic laminated molded body, which produces the fiber-reinforced plastic laminated molded body according to claim 9, comprising
laminating a fiber-reinforced plastic molding material having a polycarbonate resin as a matrix resin and a phenoxy resin film, and performing a molding process at a temperature of 260°C or higher.

19. A fiber-reinforced plastic molding material, comprising:

a reinforcing fiber base material;
a phenoxy resin coating layer formed on one surface of the reinforcing fiber base material; and
a polycarbonate resin coating layer formed on the other surface of the reinforcing fiber base material.

20. The fiber-reinforced plastic molding material according to claim 19, wherein the reinforcing fiber base material is a woven fabric made of continuous fibers or a UD material in which continuous fibers are drawn together in one direction.

10

30

Lamination

Heat-pressure molding

20

**FIG.1**

10

50A

Lamination

Heat-pressure molding

40

**FIG.2**

20

50B

Lamination

Heat-pressure molding

60

**FIG.3**

FIG.4

FIG.5

| | INTERNATIONAL SEARCH REPORT | International application No. |
|---|---|---|
| | | PCT/JP2020/013322 |

A. CLASSIFICATION OF SUBJECT MATTER

B32B 5/28(2006.01)i; B32B 27/00(2006.01)i; C08L 69/00(2006.01)i; C08L 63/00(2006.01)i; C08L 71/10(2006.01)i; C08J 5/04(2006.01)i; C08J 5/24(2006.01)i

FI:      C08L71/10; B32B5/28; B32B27/00 C; C08L69/00; C08L63/00 A; C08J5/04 CEZ; C08J5/24 CEZ

According to International Patent Classification (IPC) or to both national classification and IPC

B. FIELDS SEARCHED

Minimum documentation searched (classification system followed by classification symbols)

B32B1/00-43/00; C08L69/00-71/14; C08L63/00-63/10; C08J5/04; C08J5/24

Documentation searched other than minimum documentation to the extent that such documents are included in the fields searched

| | | |
|---|---|---|
| Published examined utility model applications of Japan | | 1922–1996 |
| Published unexamined utility model applications of Japan | | 1971–2020 |
| Registered utility model specifications of Japan | | 1996–2020 |
| Published registered utility model applications of Japan | | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2006-70065 A (IDEMITSU KOSAN CO., LTD.)<br>16.03.2006 (2006-03-16) claims, examples | 1–6<br>7, 8 |
| X<br>A | JP 2006-104329 A (IDEMITSU KOSAN CO., LTD.)<br>20.04.2006 (2006-04-20) claims, examples | 1–6<br>7, 8 |
| X<br>A | JP 5-302025 A (TEIJIN CHEMICALS LTD.) 16.11.1993<br>(1993-11-16) claims, paragraph [0007], examples | 1, 3, 4, 6–8<br>2, 5 |
| X<br>A | JP 2015-81333 A (TEIJIN LTD.) 27.04.2015 (2015-04-<br>27) claims, examples | 1, 3, 4, 6–8<br>2, 5 |

☒ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 June 2020 (09.06.2020) | 16 June 2020 (16.06.2020) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

# EP 3 950 304 A1

<table>
<tr><td colspan="2" align="center">**INTERNATIONAL SEARCH REPORT**</td><td>International application No.</td></tr>
<tr><td colspan="2"></td><td>PCT/JP2020/013322</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | WO 2018/124215 A1 (NIPPON STEEL & SUMIKIN CHEMICAL CO., LTD.) 05.07.2018 (2018-07-05) claims, paragraphs [0037], [0057], [0058], [0062]-[0072] | 9, 10, 12<br>11, 13-20 |
| A | JP 2000-177256 A (MATSUSHITA ELECTRIC INDUSTRIAL CO., LTD.) 27.06.2000 (2000-06-27) claims | 9-20 |
| A | US 2003/0220036 A1 (ROBERT, A. Lee) 27.11.2003 (2003-11-27) claims | 9-20 |

Form PCT/ISA/210 (continuation of second sheet) (January 2015)

32

**INTERNATIONAL SEARCH REPORT**
Information on patent family members

International application No.

PCT/JP2020/013322

| Patent Documents referred in the Report | Publication Date | Patent Family | Publication Date |
|---|---|---|---|
| JP 2006-70065 A | 16 Mar. 2006 | (Family: none) | |
| JP 2006-104329 A | 20 Apr. 2006 | (Family: none) | |
| JP 5-302025 A | 16 Nov. 1993 | (Family: none) | |
| JP 2015-81333 A | 27 Apr. 2015 | (Family: none) | |
| WO 2018/124215 A1 | 05 Jul. 2018 | CN 110121413 A claims KR 10-2019-0095318 A | |
| JP 2000-177256 A | 27 Jun. 2000 | US 6335307 B1 claims | |
| US 2003/0220036 A1 | 27 Nov. 2003 | WO 2001/045941 A2 claims | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016152856 A
- JP 2968388 B
- WO 2005536597 A
- JP 6278286 B
- WO 2018124215 A
- JP 5626330 B
- JP 2019057952 A
- JP 2019066082 A